# EUROPEAN PATENT APPLICATION

(11) **EP 4 748 535 A1**
(43) Date of publication of application: **27.05.2026**
(21) Application number: 25217777.9
(22) Date of filing: 21.11.2025
(51) Int. Cl.: B25J 9/00, B07C 5/36, B25J 9/16, B25J 15/06

(54) **OBJECT CAPTURE APPARATUSES, MACHINES, SYSTEMS, AND METHODS**

(30) Priority: 21.11.2024 US 202463723508 P
(71) Applicant: NYPIT, Inc. (dba EverestLabs Inc.), Fremont, CA 94538 (US)
(72) Inventor: KAMAT, Samir Ganesh, FREMONT (CA), 94538 (US); SHARMA, Aneesh, FREMONT (CA), 94538 (US); GUERRERO, Valeria Isabel Avila, FREMONT (CA), 94538 (US)
(74) Representative: Fioravanti, Corrado

(57) **Abstract**

An apparatus for capturing an object includes a gas pressure source operable to provide a gas pressure at a gas pressure port, and a capture body having a conduit chamber in communication with the gas pressure port and a conduit opening in communication with the conduit chamber such that the capture body conveys, through the conduit chamber, to the conduit opening, at least some of the gas pressure provided by the gas pressure source at the gas pressure port. The capture body is operable to capture the object using at least some of the gas pressure conveyed through the conduit chamber to the conduit opening. The apparatus also includes a pressure sensor between the gas pressure port and the conduit opening, which is operable to measure gas pressure in the conduit chamber between the gas pressure port and the conduit opening.

## Description

### Cross-reference to related application

This application claims the benefit of, and priority to, United States provisional patent application no. 63/723,508 filed November 21, 2024, the entire contents of which are incorporated by reference herein.

### Field

This disclosure relates generally to object capture apparatuses, machines, systems, and methods.

### Background

Object sorting systems may be used to selectively extract objects with particular qualities from mixtures of objects. For example, such systems be used in the recycling industry to separate recyclable materials from waste, and to group similar recyclable materials together. However, existing object sorting systems may not be sufficiently accurate or efficient.

### Summary

According to at least one embodiment, there is disclosed an apparatus for capturing an object, the apparatus comprising: a gas pressure source defining a gas pressure port, the gas pressure source operable to provide a gas pressure at the gas pressure port; a capture body defining, at least: a conduit chamber in communication with the gas pressure port; and a conduit opening in communication with the conduit chamber such that the capture body conveys, through the conduit chamber, to the conduit opening, at least some of the gas pressure provided by the gas pressure source at the gas pressure port, wherein the capture body is operable to capture the object using at least some of the gas pressure conveyed through the conduit chamber to the conduit opening; and a pressure sensor between the gas pressure port and the conduit opening, the pressure sensor operable to measure a conduit chamber gas pressure in the conduit chamber between the gas pressure port and the conduit opening.

According to at least one embodiment, there is disclosed a machine comprising: the apparatus as disclosed above; and an actuator operable to move the apparatus.

According to at least one embodiment, there is disclosed an object capture system comprising: the apparatus as disclosed above or the machine as disclosed above; at least one processor circuit; and at least one computer-readable storage medium comprising stored thereon program codes that, when executed by the at least one processor circuit, cause the at least one processor circuit to, at least: receive a pressure measurement signal from the pressure sensor, the pressure measurement signal representing a measurement of the conduit chamber gas pressure; and in response to receiving the pressure measurement signal, use at least the measurement of the conduit chamber gas pressure to predict a probability of successful object capture.

According to at least one embodiment, there is disclosed an object capture system comprising: the apparatus as disclosed above or the machine as disclosed above; at least one processor circuit; and at least one computer-readable storage medium comprising stored thereon program codes that, when executed by the at least one processor circuit, cause the at least one processor circuit to, at least: receive an optical measurement signal from the optical sensor, the optical measurement signal representing an image of a field of view of the optical sensor; and in response to receiving the optical measurement signal, use at least one image analysis algorithm to analyze the image to identify capturable objects in the image.

According to at least one embodiment, there is disclosed an object sorting system comprising: the machine as disclosed above, wherein the actuator is operable to move the apparatus to cause the capture body to move within at least a capture range of motion; and a conveyor operable and positioned to convey objects within the capture range of motion.

According to at least one embodiment, there is disclosed an object sorting system comprising: the object capture system as disclosed above wherein the actuator is operable to move the apparatus to cause the capture body to move within at least a capture range of motion; and a conveyor operable and positioned to convey objects within the capture range of motion.

According to at least one embodiment, there is disclosed a method of operating the apparatus as disclosed above, the method comprising causing the gas pressure source to provide the gas pressure at the gas pressure port to unblock the conduit chamber.

According to at least one embodiment, there is disclosed a method of operating the apparatus as disclosed above, the method comprising causing the gas pressure source to provide the positive gas pressure at the gas pressure port.

According to at least one embodiment, there is disclosed a method of operating the apparatus as disclosed above, the method comprising causing the gas pressure source to provide the negative gas pressure at the gas pressure port.

According to at least one embodiment, there is disclosed a method of operating the apparatus as disclosed above, the method comprising: causing the gas pressure source to provide the positive gas pressure at the gas pressure port; and causing the gas pressure source to provide the negative gas pressure at the gas pressure port.

Other aspects and features will become apparent to those ordinarily skilled in the art upon review of the following description of illustrative embodiments in conjunction with the accompanying figures.

### Brief description of the drawings

Exemplary embodiments are illustrated in referenced figures of the drawings. It is intended that the embodiments and figures disclosed herein are to be considered illustrative rather than restrictive.
FIG. 1 is a perspective view of an object sorting system according to one embodiment.
FIG. 2 is a perspective view of an object capture machine of the object sorting system of FIG. 1.
FIG. 3 is a side view of the object capture machine of FIG. 2.
FIG. 4 is a front view of the object capture machine of FIG. 2.
FIG. 5 is a cross-sectional view of an object capture apparatus of the object capture machine of FIG. 2, taken along a line labeled FIG. 5 in FIG. 4.
FIG. 6 schematically illustrates a processor circuit of a machine controller of the object sorting system of FIG. 1.
FIG. 7 is a perspective view of an alternate object capture machine usable with the object sorting system of FIG. 1.
FIG. 8 is a side view of the object capture machine of FIG. 7.
FIG. 9 is a front view of the object capture machine of FIG. 7.
FIG. 10 is a front view of a capture body of the object capture machine of FIG. 7.
FIG. 11 is a cross-sectional view of the capture body of FIG. 10, taken along a line labeled FIG. 11 in FIG. 10.
FIG. 12 is a side view of an alternate object capture machine usable with the object sorting system of FIG. 1.
FIG. 13 is a front view of the object capture machine of FIG. 12.
FIG. 14 is a side view of an object capture apparatus usable with the object capture machines of FIGS. 2, 7, and/or 12.
FIG. 15 is a cross-sectional view of the object capture apparatus of FIG. 14, taken along a line labeled FIG. 15 in FIG. 14.

### Detailed description

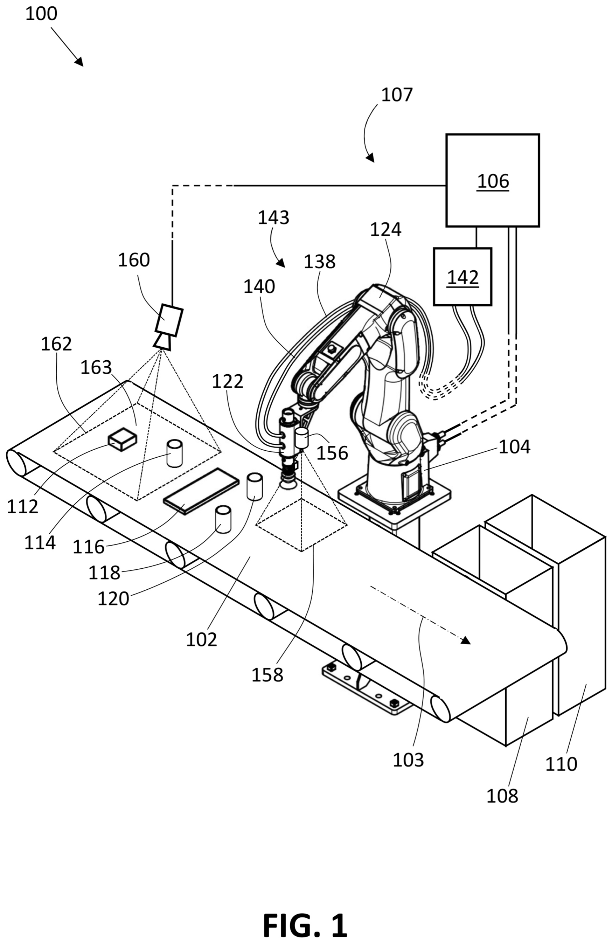

Referring to FIG. 1, an object sorting system according to one embodiment is shown generally at 100 and includes a conveyor 102, an object capture machine 104, a machine controller 106, and sorting containers 108 and 110. In general, the conveyor 102 may convey various objects, such as objects 112, 114, 116, 118, and 120, in a conveying direction 103 toward, within, and past a capture range of motion of the object capture machine 104. As used herein, the term "capture range of motion" refers to a space from which the object capture machine 104 is operable to capture objects, such as the objects 112, 114, 116, 118, and 120. Once the objects are within the capture range of motion of the object capture machine 104, the object capture machine 104 may be controlled by the machine controller 106 to selectively capture objects from the conveyor 102 and deposit them, for example, into one of the sorting containers 108 or 110. In some embodiments, the object capture machine 104 and the machine controller 106 may together be referred to as an object capture system 107. In some embodiments, the objects conveyed by the conveyor may include a mixture of recyclable materials and solid waste, and the object capture machine 104 may be controlled by the machine controller 106 to separate the recyclable materials from the solid waste. For example, the object capture machine 104 may capture a first type of recyclable material and deposit it into the sorting container 108, and may capture a second type of recyclable material and deposit it into the sorting container 110, and may avoid capturing any solid waste.

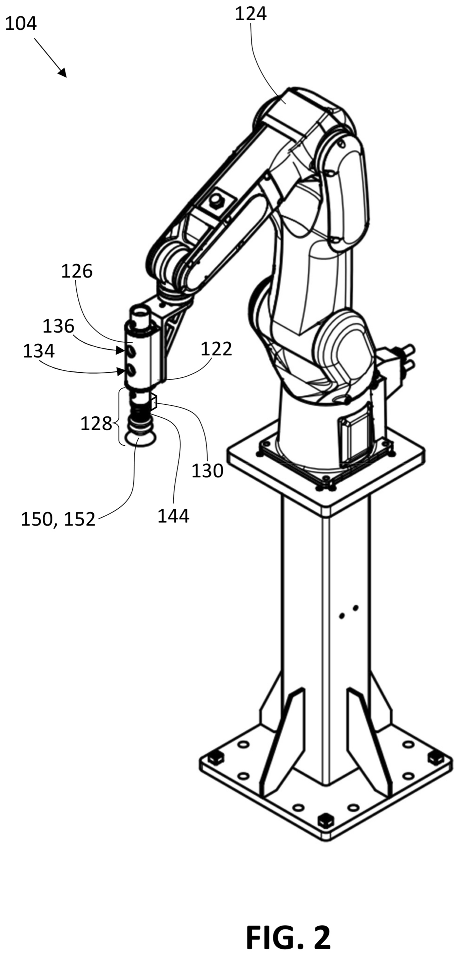

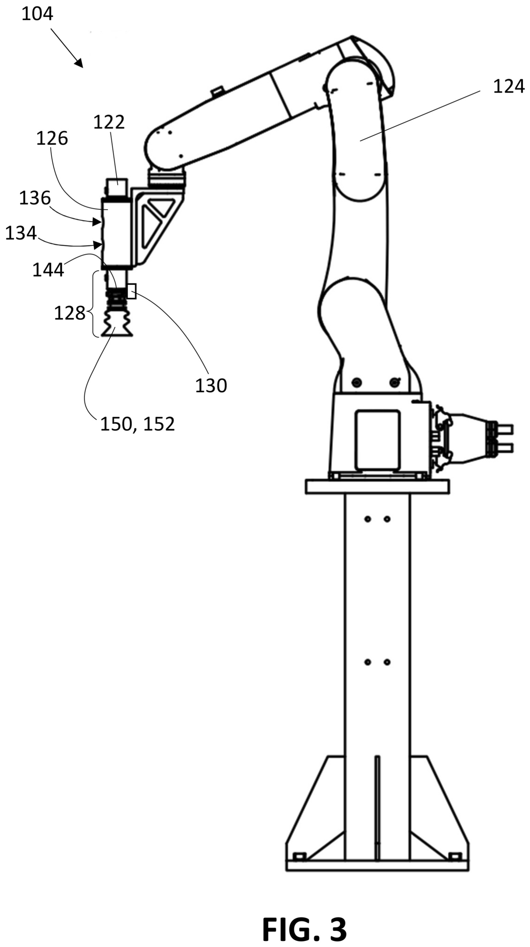

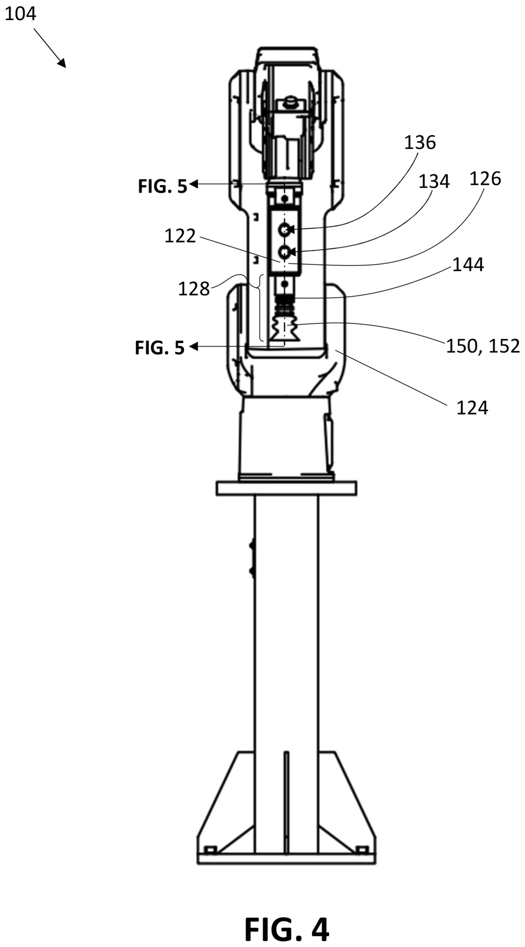

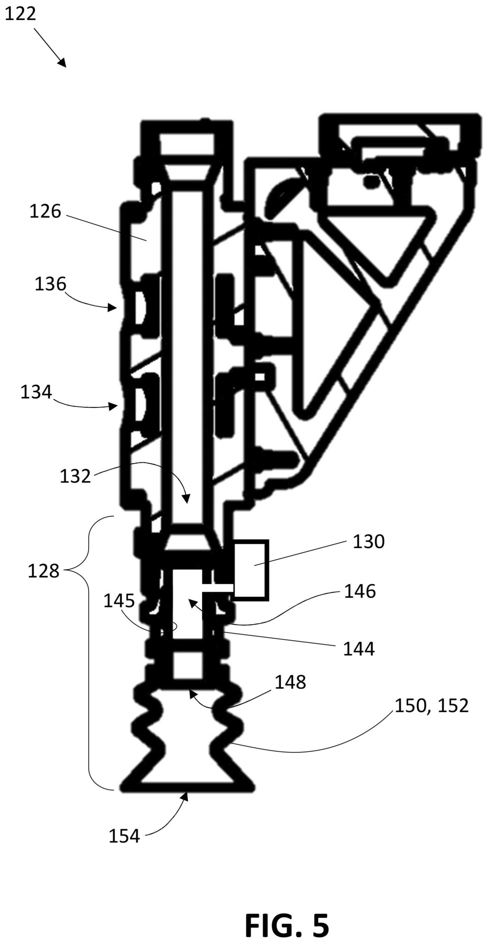

Referring now to FIGS. 1 to 5, the object capture machine 104 includes an object capture apparatus 122 for capturing objects from the conveyor 102 and an actuator 124 operable to position and support the object capture apparatus 122 and to move the object capture apparatus 122 during operation, for example, between the conveyor 102 and the sorting containers 108 and 110. The actuator 124 is operable to receive one or more movement control signals from the machine controller 106, and to move in response to receiving such signals. In the embodiment shown, the actuator 124 includes a robot arm. However, in alternative embodiments, the actuator 124 may instead or in addition include one or more electric motors.

The object capture apparatus 122 includes a gas pressure source 126, a capture body 128, and a pressure sensor 130. The gas pressure source 126 defines a gas pressure port, shown generally at 132, and is generally operable to provide a gas pressure at the gas pressure port 132. In the embodiment shown, the gas pressure source 126 is a vacuum pump. More specifically, in the embodiment shown, the gas pressure source 126 is a vacuum ejector (also known as a Venturi pump) and is operable to provide both negative (i.e., vacuum) and positive gas pressures at the gas pressure port 132. The gas pressure source 126 of the embodiment shown also defines a vacuum gas supply port, shown generally at 134, and a purge gas supply port, shown generally at 136. Generally, the gas pressure source 126 is configured to provide a negative gas pressure at the gas pressure port 132 upon receiving a positive input gas pressure through the vacuum gas supply port 134, and is configured to provide a positive gas pressure at the gas pressure port 132 upon receiving a positive input gas pressure through the purge gas supply port 136.

In the embodiment shown in FIG. 1, the object capture system 107 (which, as defined above, includes the object capture machine 104 and the machine controller 106) also includes a vacuum port input duct 138, a purge port input duct 140, and an input gas source 142. The input gas source 142 is operable to receive one or more pressure control signals from the machine controller 106, and to selectively provide input gas pressures in response to receiving such signals. Each of the vacuum port input duct 138 and the purge port input duct 140 is connected to the input gas source 142 to receive input gas pressures from the input gas source 142. The vacuum port input duct 138 is also connected to the vacuum gas supply port 134 of the gas pressure source 126 and thus conveys input gas pressures from the input gas source 142 to the vacuum gas supply port 134. Similarly, the purge port input duct 140 is connected to the purge gas supply port 136 of the gas pressure source 126 and thus conveys input gas pressures from the input gas source 142 to the purge gas supply port 136. Therefore, for example, in response to receiving a vacuum pressure control signal from the machine controller 106, the input gas source 142 may provide a positive input gas pressure to the gas pressure source 126 through the vacuum port input duct 138 and the vacuum gas supply port 134 to cause the gas pressure source 126 to provide a negative gas pressure at the gas pressure port 132. Similarly, in response to receiving a purge pressure control signal from the machine controller 106, the input gas source 142 may provide a positive input gas pressure to the gas pressure source 126 through the purge port input duct 140 and the purge gas supply port 136 to cause the gas pressure source 126 to provide a positive gas pressure at the gas pressure port 132. In some embodiments, the input gas source 142 may be a compressed air source operable to provide compressed air (i.e., the input gas pressure) to the gas pressure source 126 through the vacuum port input duct 138 and the vacuum gas supply port 134 and/or through the purge port input duct 140 and the purge gas supply port 136. In some embodiments, the gas pressure source 126, the vacuum port input duct 138, the purge port input duct 140, and the input gas source 142 may be referred to as a gas pressure system 143.

The gas pressure source 126 shown in FIGS. 1 to 5 is an example only and may differ in alternative embodiments. For example, some alternative embodiments may include a gas pressure source other than a vacuum ejector, or a gas pressure source that is not a vacuum pump.

The capture body 128 of the object capture apparatus 122 includes a conduit body 144 defining a conduit chamber, shown generally at 146, and a conduit opening, shown generally at 148. More specifically, the conduit body 144 includes a conduit surface 145 defining the conduit chamber 146. In the embodiment shown, the conduit body 144 is attached to the gas pressure source 126. The conduit chamber 146 is in communication with the gas pressure port 132 of the gas pressure source 126 to receive at least some of the gas pressure provided by the gas pressure source 126 at the gas pressure port 132. The gas pressure provided by the gas pressure source 126 at the gas pressure port 132 may thus cause a gas flow in the conduit chamber 146. The conduit opening 148 is in communication with the conduit chamber 146 such that the conduit body 144 of the capture body 128 conveys, through the conduit chamber 146, to the conduit opening 148, at least some of the gas pressure provided by the gas pressure source 126 at the gas pressure port 132. Generally, the capture body 128 is operable to capture an object using at least some of the gas pressure thus conveyed through the conduit chamber 146 to the conduit opening 148. For example, in some embodiments, a negative gas pressure (i.e., vacuum) provided at the gas pressure port 132 by the gas pressure source 126 may generate suction into the conduit chamber 146 at the conduit opening 148. In such embodiments, the capture body 128 may be operable to capture objects using at least some of this suction generated at the conduit opening 148. For example, in some such embodiments, the suction generated at the conduit opening 148 may hold the object against the capture body 128 when the capture body 128 captures the object.

When the capture body 128 captures an object, there is a possibility that the object may enter through the conduit opening 148 and become trapped or stuck inside the conduit chamber 146, thus blocking or clogging the conduit chamber 146. In such situations, the conduit chamber 146 may be unblocked by causing the gas pressure source 126 to provide a positive gas pressure at the gas pressure port 132. The conduit body 144 may then convey at least some of this positive gas pressure through the conduit chamber 146 and toward the conduit opening 148 to push (i.e., "blow out") the trapped object back out through the conduit opening 148. In some embodiments, the conduit surface 145 may include a lubricant coating that may facilitate the pushing of such trapped objects out of the conduit chamber 146. The lubricant coating may be or may include an epoxy, for example.

In the embodiment shown, the capture body 128 includes a capture tool 150 attached to the conduit body 144 and in communication with the conduit opening 148 to receive, from the conduit opening 148, at least some of the gas pressure conveyed through the conduit chamber 146 to the conduit opening 148. Generally, the capture tool 150 may be used by the capture body 128 to capture objects. More specifically, the capture tool 150 is operable to capture an object using at least some of the gas pressure received by the capture tool 150 from the conduit opening 148. In the embodiment shown in FIGS. 1 to 5, the capture tool 150 includes a suction cup 152 defining a suction cup opening shown generally at 154. The suction cup opening 154 is open to an exterior of the object capture apparatus 122 and is in communication with the conduit opening 148 through the suction cup 152 such that the suction cup 152 (and thus the capture tool 150) conveys, to the suction cup opening 154, at least some of the gas pressure received from the conduit opening 148. The suction cup 152 may use at least some of the pressure thus conveyed to the suction cup opening 154 to capture objects that are near the suction cup opening 154. For example, when the gas pressure source 126 generates suction into the conduit chamber 146 at the conduit opening 148, as described above, at least some of this suction may be conveyed to the suction cup opening 154 and may cause an object to be pulled toward and against the suction cup 152 at the suction cup opening 154, thus capturing the object.

The pressure sensor 130 of the object capture apparatus 122 is positioned between the gas pressure port 132 of the gas pressure source 126 and the conduit opening 148 of the conduit body 144 of the capture body 128. The pressure sensor 130 is operable to measure a conduit chamber gas pressure in the conduit chamber 146 between the gas pressure port 132 and the conduit opening 148, and is also operable to send one or more pressure measurement signals representing such a measurement of the conduit chamber gas pressure to the machine controller 106. For example, the pressure sensor 130 may measure the conduit chamber gas pressure in the conduit chamber 146 when the capture body 128 (and thus the object capture apparatus 122) captures an object or attempts to capture an object. Such measurements of the conduit chamber gas pressure taken during object capture attempts may be useful in predicting whether or not the capture body 128 (and thus the object capture apparatus 122) has successfully captured the object. In the embodiment shown, the pressure sensor 130 is positioned to measure conduit chamber gas pressure in the conduit chamber 146 in-line between the gas pressure port 132 and the conduit opening 148. Such in-line positioning of the pressure sensor 130 may provide measurements of the conduit chamber gas pressure which may be particularly valuable for predicting successful object capture.

Referring back to FIG. 1, in the embodiment shown, the object capture apparatus 122 also includes an optical sensor 156 attached to the gas pressure source 126 and having a field of view 158 including, at least, a capture space of the capture body 128. As used herein, the term "capture space" refers to a space from which the capture body 128 is operable to capture an object when the object capture apparatus 122 is in a particular position. For example, when the object capture machine 104 is arranged as shown in FIG. 1, with the actuator 124 holding the object capture apparatus 122 above the conveyor 102, the capture body 128 may be operable to capture objects from the conveyor 102 as the conveyor 102 carries the objects under the object capture apparatus 122 - in this situation, the capture space would include a surface of the conveyor 102 directly underneath object capture apparatus 122 and the capture body 128. The optical sensor 156 is operable to record an image of the field of view 158, and is also operable to send one or more optical measurement signals representing such an image of the field of view 158 to the machine controller 106. For example, the optical sensor 156 may record and send an image of the field of view 158 when the capture body 128 (and thus the object capture apparatus 122) captures an object or attempts to capture an object. Such images of the field of view 158 recorded during object capture attempts may be useful in predicting whether or not the capture body 128 (and thus the object capture apparatus 122) has successfully captured the object. In some embodiments, the optical sensor 156 may be or may include one or more cameras.

In some embodiments, the object capture apparatus 122 may be lightweight enough to generally accommodate industrial robotics, allowing, for example, the actuator 124 to use all of its available range of motion while supporting and moving the object capture apparatus 122. For example, the gas pressure source 126 and the capture body 128 may have a combined mass of about 1 kilogram, or of at most 1 kilogram. In some embodiments, one or both of the gas pressure source 126 and the capture body 128 may be at least partly made of aluminum.

Of course, the object capture apparatus 122 of the embodiment shown in FIGS. 1 to 5 is an example only, and alternative embodiments may differ. For example, in some alternative embodiments, the capture body 128 may include a capture tool other than a suction cup, more than one capture tool, or no capture tool. In some alternative embodiments, the capture tool 150 may be or may include a pneumatic magnet. In such embodiments, the pneumatic magnet may be in communication with the conduit opening 148 to receive, from the conduit opening 148, at least some of the gas pressure conveyed through the conduit chamber 146 to the conduit opening 148, and may be operable to capture objects using at least some of the gas pressure thus received. In some alternative embodiments, the capture tool 150 may be or may include a pneumatic gripper. In such embodiments, the pneumatic gripper may be in communication with the conduit opening 148 to receive, from the conduit opening 148, at least some of the gas pressure conveyed through the conduit chamber 146 to the conduit opening 148, and may be operable to capture objects using at least some of the gas pressure thus received. In some embodiments, the capture tool 150 may be detachably attached to the conduit body 144. That is, the capture tool 150 may be removable from the conduit body 144 to allow for maintenance or replacement, for example. In some such embodiments, the capture tool 150 may be interchangeable with other and/or different capture tools. For example, in such embodiments, depending on the nature of the objects being captured at any given time, the capture tool 150 may be alternated between one or more of a suction cup, a pneumatic magnet, and/or a pneumatic gripper. Additionally, in some alternative embodiments, the optical sensor 156 may be attached to the capture body 128 in addition to or instead of being attached to the gas pressure source 126.

In the embodiment shown in FIG. 1, the object sorting system 100 also includes a triage optical sensor 160 having a triage field of view 162 including, at least, an upstream portion 163 of the conveyor 102. When the conveyor 102 conveys the objects in the conveying direction 103, the upstream portion 163 of the conveyor 102 is positioned to convey the objects before the objects reach the object capture machine 104. Thus, when the conveyor 102 conveys the objects in the conveying direction 103, objects on the conveyor 102 may pass through the triage field of view 162 before reaching the capture range of motion of the object capture machine 104 - that is, before being capturable by the object capture machine 104. The triage optical sensor 160 is operable to record a triage image of the triage field of view 162, and is also operable to send one or more triage optical measurement signals representing such a triage image of the triage field of view 162 to the machine controller 106. For example, the triage optical sensor 160 may record and send triage images of the triage field of view 162 as objects are conveyed through the triage field of view 162 by the conveyor 102, before the objects are capturable by the object capture machine 104. Such triage images of the triage field of view 162 may be useful in prioritizing which of the objects to attempt to capture from the conveyor 102. In some embodiments, the triage optical sensor 160 may be or may include one or more cameras.

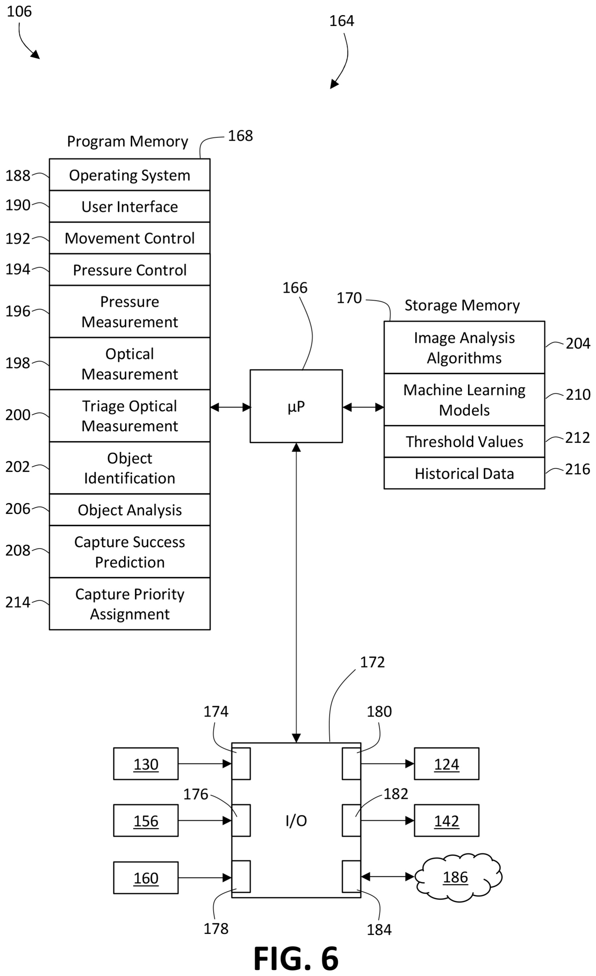

Referring now to FIG. 6, the machine controller 106 includes a processor circuit shown generally at 164. The processor circuit 164 includes a central processing unit ("CPU") or microprocessor 166. The processor circuit 164 also includes a program memory 168, a storage memory 170, and an input/output ("I/O") module 172, each in communication with the microprocessor 166. In general, the program memory 168 stores program codes that, when executed by the microprocessor 166, cause the processor circuit 164 to implement functions of the machine controller 106 such as those described herein, for example. Further, in general, the storage memory 170 includes stores for storing storage codes as described herein, for example. The program memory 168 and the storage memory 170 may be implemented in one or more of the same or different computer-readable storage media, which in various embodiments may include one or more of a read-only memory ("ROM"), random access memory ("RAM"), a hard disc drive ("HDD"), a solid-state drive ("SSD"), and other computer-readable and/or computer-writable storage media.

The I/O module 172 may include various signal interfaces, analog-to-digital converters ("ADCs"), digital-to-analog converters ("DACs"), receivers, transmitters, and/or other circuitry to receive, produce, and transmit signals as described herein, for example. In the embodiment shown, the I/O module 172 includes a pressure measurement signal interface 174 for receiving pressure measurement signals from the pressure sensor 130, an optical measurement signal interface 176 for receiving optical measurement signals from the optical sensor 156, a triage optical measurement signal interface 178 for receiving triage optical measurement signals from the triage optical sensor 160, a movement control signal interface 180 for sending movement control signals to the actuator 124, and a pressure control signal interface 182 for sending pressure control signals to the input gas source 142. The I/O module 172 also includes a network interface 184 to transmit signals to, receive signals from, or transmit signals to and receive signals from a computer network 186, which may be in communication with one or more external computers (not shown).

The I/O module 172 shown in FIG. 6 is an example only and may differ in alternative embodiments. For example, alternative embodiments may include more, fewer, or different interfaces. More generally, the processor circuit 164 shown in FIG. 6 is an example only, and alternative embodiments may differ. For example, in alternative embodiments, the machine controller 106 may include different hardware, different software, or both. Such different hardware may include more than one microprocessor, one or more central processing units ("CPUs"), one or more machine learning chips, one or more cloud server computers, one or more other alternatives to the microprocessor 166, discrete logic circuits, or an application-specific integrated circuit ("ASIC"), or combinations of one or more thereof, for example.

In the embodiment shown, the program memory 168 includes operating system program codes 188 of an operating system. The program memory 168 also includes user interface program codes 190 that, when executed by the microprocessor 166, cause the processor circuit 164 to control an interactive user interface of the machine controller 106. Users may use such an interactive user interface to, for example, adjust one or more control settings of the machine controller 106. Users may access such an interactive user interface, for example, from the one or more external computers through the computer network 186.

Referring to FIGS. 1 to 6, the program memory 168 further includes movement control program codes 192 that, when executed by the microprocessor 166, cause the processor circuit 164 to send, by way of the movement control signal interface 180, one or more movement control signals to the actuator 124. As noted above, the actuator 124 is operable to move in response to receiving such movement control signals. Therefore, the machine controller 106 is operable to control movement of the actuator 124 and thus a position of the object capture apparatus 122.

The program memory 168 further includes pressure control program codes 194 that, when executed by the microprocessor 166, cause the processor circuit 164 to send, by way of the pressure control signal interface 182, one or more pressure control signals to the input gas source 142 of the gas pressure system 143. As noted above, in response to receiving such pressure control signals, the input gas source 142 is operable to provide an input gas pressure, through the vacuum port input duct 138 or the purge port input duct 140, to the gas pressure source 126 to cause the gas pressure source 126 to provide a corresponding gas pressure at the gas pressure port 132. Therefore, by controlling the input gas source 142, the machine controller 106 is ultimately operable to control the gas pressure provided by the gas pressure source 126 at the gas pressure port 132.

The program memory 168 further includes pressure measurement program codes 196 that, when executed by the microprocessor 166, cause the processor circuit 164 to receive, by way of the pressure measurement signal interface 174, one or more pressure measurement signals from the pressure sensor 130. Thus, the machine controller 106 may use the pressure sensor 130 to monitor the conduit chamber gas pressure in the conduit chamber 146 of the capture body 128.

The program memory 168 further includes optical measurement program codes 198 that, when executed by the microprocessor 166, cause the processor circuit 164 to receive, by way of the optical measurement signal interface 176, one or more optical measurement signals from the optical sensor 156. Similarly, the program memory 168 also includes triage optical measurement program codes 200 that, when executed by the microprocessor 166, cause the processor circuit 164 to receive, by way of the triage optical measurement signal interface 178, one or more triage optical measurement signals from the triage optical sensor 160. Thus, the machine controller 106 may use the optical sensor 156 to monitor the field of view 158, which includes the capture space of the capture body 128, and may use the triage optical sensor 160 to monitor the triage field of view 162, which includes the upstream portion 163 of the conveyor 102.

The program memory 168 further includes capturable object identification program codes 202 that, when executed by the microprocessor 166, cause the processor circuit 164 to, in response to receiving an optical measurement signal representing an image of the field of view 158 from the optical sensor 156, use one or more image analysis algorithms to analyze the image to identify capturable objects in the image. Additionally, the capturable object identification program codes 202 may, when executed by the microprocessor 166, cause the processor circuit 164 to, in response to receiving a triage optical measurement signal representing a triage image of the triage field of view 162 from the triage optical sensor 160, use one or more triage image analysis algorithms to analyze the triage image to identify capturable objects in the triage image. Thus, the machine controller 106 may identify capturable objects in the capture space of the capture body 128 and/or on the upstream portion 163 of the conveyor 102. Storage codes representing the image analysis algorithms and the triage image analysis algorithms may be stored in and retrieved from an image analysis algorithm store 204 in the storage memory 170. In some embodiments, the image analysis algorithms and the triage image analysis algorithms may generally be similar or the same.

The program memory 168 further includes identified object analysis program codes 206 that, when executed by the microprocessor 166, cause the processor circuit 164 to, in response to an identification of a capturable object in the image of the field of view 158 by the one or more image analysis algorithms, further analyze the identified capturable object in the image. For example, when executed by the microprocessor 166, the identified object analysis program codes 206 may cause the processor circuit 164 to use a location of the identified capturable object in the image to predict a location of the identified capturable object relative to the capture body 128. The identified object analysis program codes 206 may also, when executed by the microprocessor 166, cause the processor circuit 164 to predict an optimal capture location on the identified capturable object for capturing the identified capturable object. The identified object analysis program codes 206 may also, when executed by the microprocessor 166, cause the processor circuit 164 to predict an optimal gas pressure to be provided at the gas pressure port 132 for capturing the identified capturable object. The identified object analysis program codes 206 may also, when executed by the microprocessor 166, cause the processor circuit 164 to measure a size, in the image, of the identified capturable object. The identified object analysis program codes 206 may also, when executed by the microprocessor 166, cause the processor circuit 164 to characterize a shape, in the image, of the identified capturable object. The results of each such further analysis of the identified capturable object in the image of the field of view 158 may be useful when attempting to capture the identified capturable object and/or in predicting whether or not the identified capturable object has been successfully captured.

In some embodiments, the identified object analysis program codes 206 may also, when executed by the microprocessor 166, cause the processor circuit 164 to, in response to an identification of a capturable object in the triage image of the field of view 162 by the one or more image analysis algorithms, further analyze the identified capturable object in the triage image. For example, when executed by the microprocessor 166, the identified object analysis program codes 206 may cause the processor circuit 164 to measure a size, in the triage image, of the identified capturable object. The identified object analysis program codes 206 may also, when executed by the microprocessor 166, cause the processor circuit 164 to characterize a shape, in the triage image, of the identified capturable object. The identified object analysis program codes 206 may also, when executed by the microprocessor 166, cause the processor circuit 164 to predict a material type of the identified capturable object based on an appearance of the identified capturable object in the triage image. The results of each such further analysis of the identified capturable object in the triage field of view 162 may be useful in assigning a capture priority to the identified capturable object before the identified capturable object reaches the capture range of motion of the object capture machine 104.

The program memory 168 further includes capture success prediction program codes 208 that, when executed by the microprocessor 166, cause the processor circuit 164 to predict a probability of successful capture of an object by the object capture apparatus 122. Such predictions may be made, for example, before, during, and/or after an attempt by the capture body 128 (and thus the object capture apparatus 122) to capture the object. In some embodiments, the capture success prediction program codes 208, when executed by the microprocessor 166, may cause the processor circuit 164 to, in response to receiving, from the pressure sensor 130, a pressure measurement signal representing a measurement of the conduit chamber gas pressure, use at least the measurement of the conduit chamber gas pressure to predict the probability of successful object capture. Thus, the machine controller 106 may use the pressure sensor 130 to obtain feedback regarding whether and to what extent a particular capture attempt is or was successful. Such feedback may be useful for diagnostics and reporting purposes, and/or for optimizing future capture attempts.

In some embodiments, the capture success prediction program codes 208, when executed by the microprocessor 166, may cause the processor circuit 164 to, in response to the one or more image analysis algorithms analyzing an image of the field of view 158 received in an optical measurement signal from the optical sensor 156, use at least a resulting output of the one or more image analysis algorithms to predict the probability of successful object capture. For example, where the one or more image analysis algorithms have identified a capturable object in the image of the field of view 158, and the identified capturable object in the image has been further analyzed according to the identified object analysis program codes 206, the capture success prediction program codes 208, when executed by the microprocessor 166, may cause the processor circuit 164 to use one or more results of this further analysis of the identified capturable object to predict the probability of successful object capture. As a more specific example, the capture success prediction program codes 208, when executed by the microprocessor 166, may cause the processor circuit 164 to predict the probability of successful object capture using a measured size and/or a characterized shape of the identified capturable object.

In some embodiments, the capture success prediction program codes 208, when executed by the microprocessor 166, may cause the processor circuit 164 to implement one or more machine-learning models to predict the probability of successful object capture. Storage codes representing the machine learning models may be stored in and retrieved from a machine learning model store 210 in the storage memory 170.

In some embodiments, the capture success prediction program codes 208, when executed by the microprocessor 166, may cause the processor circuit 164 to, in response to a prediction of the probability of successful object capture, compare the predicted probability of successful object capture to a threshold value. If the predicted probability of successful object capture is greater than the threshold value, then the capture success prediction program codes 208, when executed by the microprocessor 166, may cause the processor circuit 164 to infer a successful object capture. Conversely, if the predicted probability of successful object capture is less than or equal to the threshold value, then the capture success prediction program codes 208, when executed by the microprocessor 166, may cause the processor circuit 164 to infer an unsuccessful object capture. Storage codes representing threshold values for comparison may be stored in and retrieved from a threshold value store 212 in the storage memory 170.

As explained above, the machine controller 106 is operable to control (according to the movement control program codes 192) movement of the actuator 124 and thus the position of the object capture apparatus 122, and is also operable to control (according to the pressure control program codes 194) the input gas source 142 and thus the gas pressure provided by the gas pressure source 126 of the object capture apparatus 122. Therefore, the machine controller 106 is effectively operable to control the object capture machine 104 to selectively capture and release objects. More specifically, the machine controller 106 may control the actuator 124 to move the object capture apparatus 122, within the capture range of motion of the object capture machine 104, to position the capture body 128 for capturing a target object - that is, such that the target object is within the capture space of the capture body 128. When the capture body 128 is positioned for capturing the target object, the machine controller 106 may further control the gas pressure provided by the gas pressure source 126 at the gas pressure port 132 to cause the capture body 128 to capture the target object.

In some embodiments, the machine controller 106 may control the object capture machine 104 based on a prediction of the probability of successful object capture (i.e., according to the capture success prediction program codes 208). For example, the pressure control program codes 194, when executed by the the microprocessor 166, may cause the processor circuit 164 to, in response to the prediction of the probability of successful object capture, send one or more pressure control signals to the input gas source 142 of the gas pressure system 143 to provide an input gas pressure to the gas pressure source 126 to cause the gas pressure source 126 to provide the gas pressure at the gas pressure port 132 at a pressure value determined based at least on the prediction of the probability of successful object capture. Similarly, the movement control program codes 192, when executed by the the microprocessor 166, may cause the processor circuit 164 to, in response to the prediction of the probability of successful object capture, send one or more movement control signals to the actuator 124 to cause the actuator 124 to move the object capture apparatus 122 along a movement path determined based at least on the prediction of the probability of successful object capture.

More specifically, in some embodiments, the machine controller 106 may control the object capture machine 104 based on whether the prediction of the probability of successful object capture indicates that the corresponding object capture attempt is, was, or would be successful or unsuccessful. That is, the machine controller 106 may control the object capture machine 104 based on an inference of a successful object capture (i.e., according to the capture success prediction program codes 208), or based on an inference of an unsuccessful object capture.

For example, in response to an inference of a successful object capture, the pressure control program codes 194, when executed by the the microprocessor 166, may cause the processor circuit 164 to send one or more pressure control signals to the input gas source 142 of the gas pressure system 143 to provide an input gas pressure to the gas pressure source 126 to cause the gas pressure source 126 to maintain the gas pressure at the gas pressure port 132 at a current pressure value. Additionally, in response to the inference of a successful object capture, the movement control program codes 192, when executed by the the microprocessor 166, may cause the processor circuit 164 to send one or more movement control signals to the actuator 124 to cause the actuator 124 to move the object capture apparatus 122 along a movement path toward a drop location, such as, for example, at or near one of the sorting containers 108 or 110. Further, the pressure control program codes 194, when executed by the the microprocessor 166, may cause the processor circuit 164 to, in response to the actuator 124 moving the apparatus 122 to an end point of the movement path (such as at or near the drop location), send at least one pressure control signal to the input gas source 142 of the gas pressure system 143 to provide an input gas pressure to the gas pressure source 126 to cause the gas pressure source 126 to provide the gas pressure at the gas pressure port 132 at a release pressure value. Providing the gas pressure at the gas pressure port 132 at the release pressure value may cause the capture body 128 to release the object. Thus, upon inferring that an object has been successfully captured, the machine controller 106 may control the object capture machine 104 to hold on to the captured object, move it toward a drop location (such as one of the sorting containers 108 or 110), and drop/release it at the drop location.

As another example, in response to an inference of an unsuccessful object capture, the movement control program codes 192, when executed by the the microprocessor 166, may cause the processor circuit 164 to send one or more movement control signals to the actuator 124 to cause the actuator 124 to move the object capture apparatus 122 away from an object which was not successfully captured. Additionally, in response to the inference of a successful object capture, the pressure control program codes 194, when executed by the the microprocessor 166, may cause the processor circuit 164 to send one or more pressure control signals to the input gas source 142 of the gas pressure system 143 to provide an input gas pressure to the gas pressure source 126 to cause the gas pressure source 126 to decrease or increase the gas pressure provided at the gas pressure port 132. Thus, upon inferring that an object has not been successfully captured, the machine controller 106 may control the object capture machine 104 to abandon the capture attempt (e.g., by moving away from the object and/or changing the gas pressure provided at the gas pressure port 132), or retry the capture attempt (e.g., by changing the gas pressure provided at the gas pressure port 132).

In the embodiment shown, the program memory 168 also includes capture priority assignment program codes 214 that, when executed by the microprocessor 166, cause the processor circuit 164 to, in response to an identification of a capturable object in the triage image of the triage field of view 162 by the one or more image analysis algorithms, assign a capture priority to the identified capturable object. Where the identified capturable object in the triage image has been further analyzed according to the identified object analysis program codes 206, the capture priority assignment program codes 214, when executed by the microprocessor 166, may cause the processor circuit 164 to use one or more results of this further analysis of the identified capturable object to assign the capture priority to the identified capturable object. For example, the capture priority assignment program codes 214, when executed by the microprocessor 166, may cause the processor circuit 164 assign the capture priority to the identified capturable object using a measured size, a characterized shape, and/or a predicted material type of the identified capturable object.

In some embodiments, the capture priority assignment program codes 214 may assign capture priorities to identified capturable objects based at least in part on historical data. Storage codes representing such historical data may be stored in and retrieved from a historical data store 216 in the storage memory 170.

In some embodiments, the capture priority assignment program codes 214 may, when executed by the microprocessor 166, cause the processor circuit 164 to, in response to one or more assignments of capture priority to respective identified capturable objects, identify a target capturable object based on a capture priority of the target capturable object. For example, the target capturable object may be selected based on having the highest capture priority of the assigned capture priorities. Once a target capturable object has been identified, the machine controller 106 may control the object capture machine 104 to capture the identified capturable object. For example, the pressure control program codes 194, when executed by the the microprocessor 166, may cause the processor circuit 164 to, in response to identifying the target capturable object, send one or more pressure control signals to the input gas source 142 of the gas pressure system 143 to provide an input gas pressure to the gas pressure source 126 to cause the gas pressure source 126 to provide the gas pressure at the gas pressure port 132 for capturing the target capturable object. Similarly, the movement control program codes 192, when executed by the the microprocessor 166, may cause the processor circuit 164 to, in response to identifying the target capturable object, send one or more movement control signals to the actuator 124 to cause the actuator 124 to move the object capture apparatus 122 to position the capture body 128 for capturing the target capturable object.

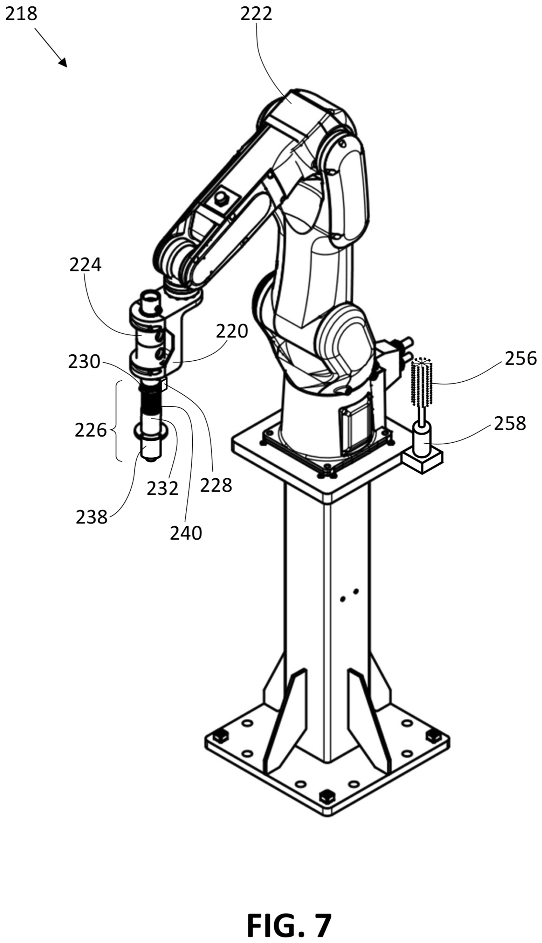

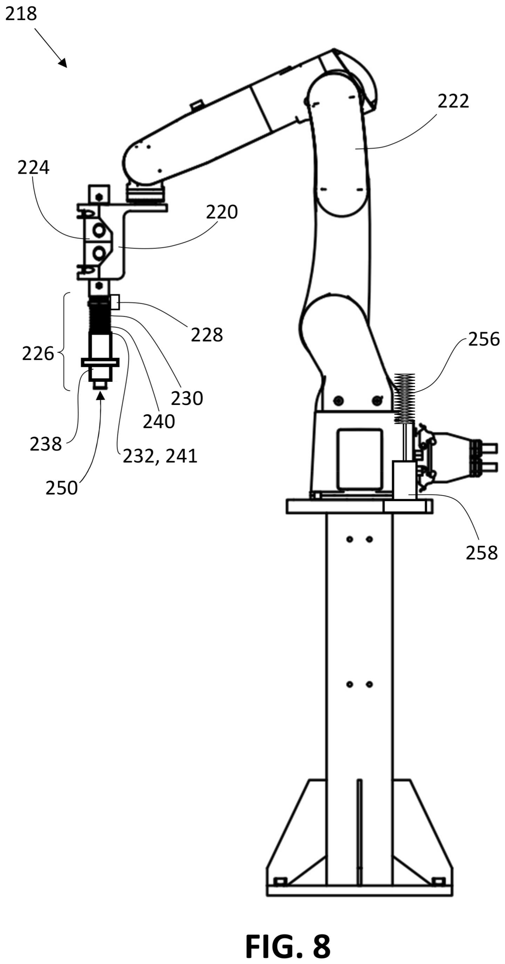

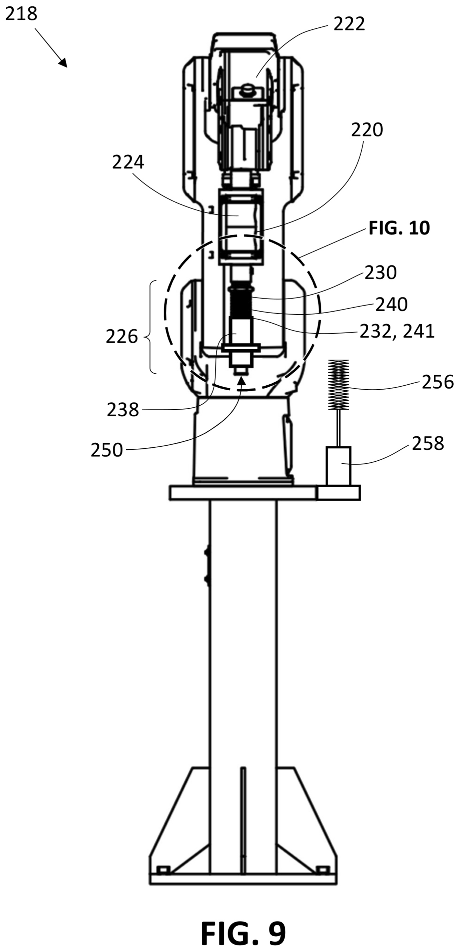

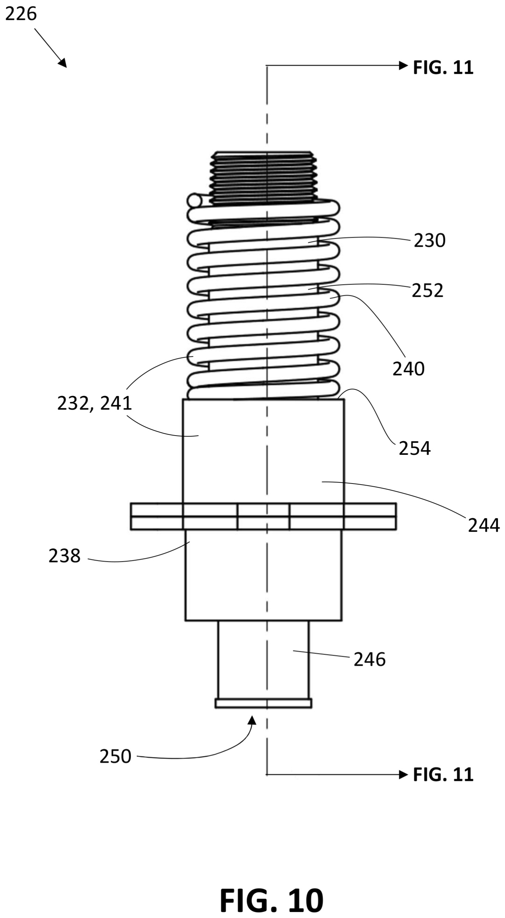

Referring now to FIGS. 7 to 11, an alternative embodiment of an object capture machine which may be used, for example, with the object sorting system 100 is shown generally at 218 and includes an object capture apparatus 220 for capturing objects from the conveyor 102 and an actuator 222 operable to position and support the object capture apparatus 220 and to move the object capture apparatus 220 during operation. Generally, the actuator 222 may be similar to the actuator 124 of the embodiment of FIGS. 1 to 5, and may also move in response to receiving movement control signals from the machine controller 106.

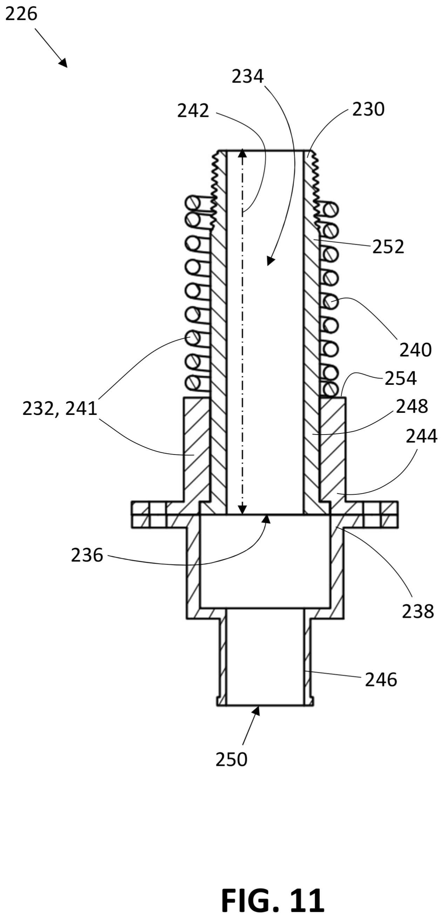

The object capture apparatus 220, like the object capture apparatus 122 of the embodiment of FIGS. 1 to 5, includes a gas pressure source 224, a capture body 226, and a pressure sensor 228. The gas pressure source 224 may be similar to the gas pressure source 126 of the embodiment of FIGS. 1 to 5, and may generally be operable to provide gas pressures to the capture body 226. The capture body 226, like the capture body 128 of the embodiment of FIGS. 1 to 5, includes a conduit body 230 attached to the gas pressure source 224 and a capture tool 232 attached to the conduit body 230. The conduit body 230 may generally be similar to the conduit body 144 of the embodiment of FIGS. 1 to 5. As shown in FIG. 11, the conduit body 230 defines a conduit chamber shown generally at 234 and a conduit opening shown generally at 236. The conduit chamber 234 is in communication with the gas pressure source 224, the conduit opening 236 is in communication with the conduit chamber 234, and the capture tool 232 is in communication with the conduit opening 236. Therefore, the conduit body 230 may convey gas pressures from the gas pressure source 224, through the conduit chamber 234 and the conduit opening 236, to the capture tool 232. The capture tool 232 may use at least some of the gas pressure thus received to capture objects. The pressure sensor 228 may be similar to the pressure sensor 130 of the embodiment of FIGS. 1 to 5, and may generally be operable to measure conduit chamber gas pressures in the conduit chamber 234, and to send pressure measurement signals representing such measurements of the conduit chamber gas pressure to the machine controller 106.

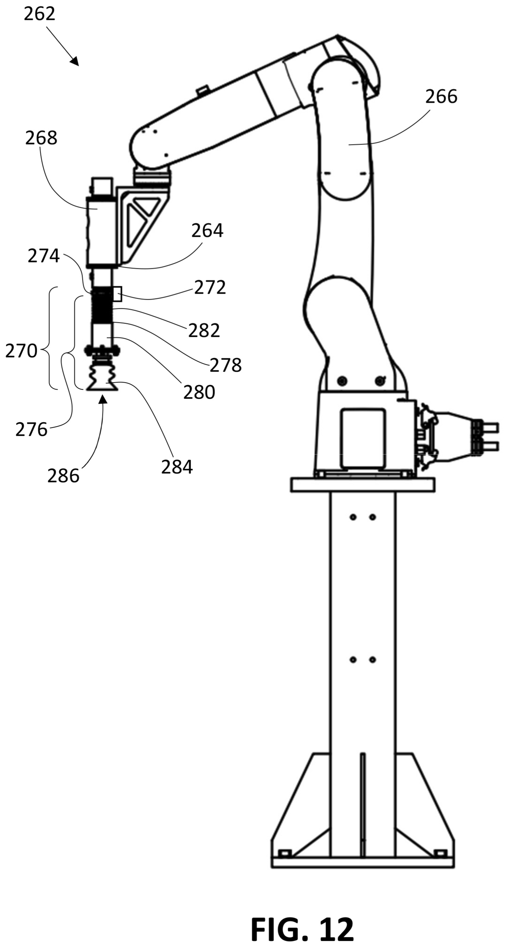

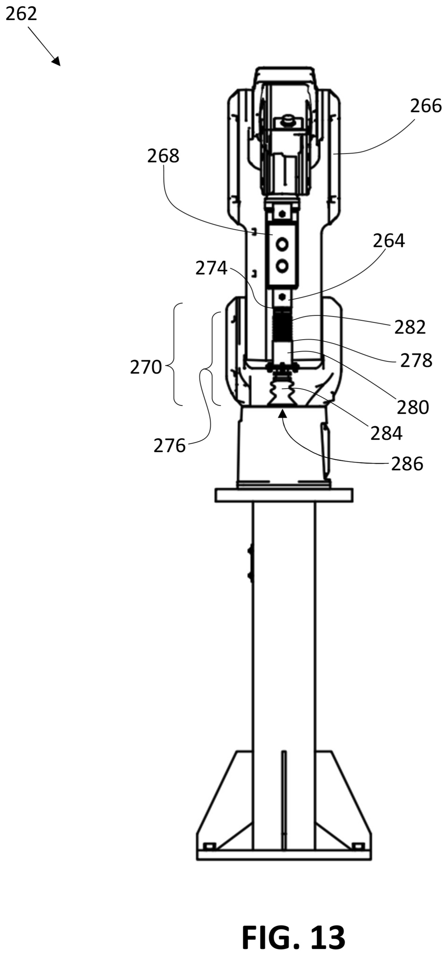

In the embodiment shown in FIGS. 7 to 11, the capture tool 232 includes a level-compensation body 238 and a resilient body 240. In some embodiments, the level-compensation body 238 and the resilient body 240 may together be referred to as a level compensator 241 (i.e., the capture tool 232 may be or may include the level compensator 241). The level-compensation body 238 is attached to the conduit body 230 and is moveable relative to the conduit body 230. More specifically, in the embodiment shown, the conduit body 230 is elongate along a longitudinal dimension 242 of the conduit body 230, and the level-compensation body 238 is slidable relative to the conduit body 230 along the longitudinal dimension 242 of the conduit body 230. The level compensation body 238 includes an intermediate body 244 and an end body 246. The intermediate body 244 attaches to the conduit body 230 by surrounding and slidably engaging an enclosed portion 248 of the conduit body 230 along the longitudinal dimension 242, such that the intermediate body 244 and thus the level compensation body 238 may slide against the conduit body 230 along the longitudinal dimension 242. The end body 246 defines a level-compensation opening shown generally at 250. The level-compensation opening 250 is open to an exterior of the object capture apparatus 220 and is in communication with the conduit opening 236 of the conduit body 230 through the end body 246 and the intermediate body 244 of the level-compensation body 238 such that the level-compensation body 238 (and thus, more generally, the capture tool 232) conveys, to the level-compensation opening 250, at least some of the gas pressure received from the conduit opening 236. The capture tool 232 may use at least some of the pressure thus conveyed to the level-compensation opening 250 to capture objects that are near the level-compensation opening 250. For example, when the gas pressure source 224 generates suction into the conduit chamber 234 of the conduit body 230 (as described above in the context of the embodiment of FIGS. 1 to 5), at least some of this suction may be conveyed to the level-compensation opening 250 and may cause an object to be pulled toward and against the end body 246 of the level-compensation body 238 at the level-compensation opening 250, thus capturing the object. In some embodiments, the end body 246 may be resiliently deformable. In some embodiments, the end body 246 may be detachably attached to the intermediate body 244. In some embodiments, the end body 246 may be or may include a suction cup (see, e.g., FIGS. 12 and 13).

The resilient body 240 is positioned and configured to exert a resilient force between the conduit body 230 and the level-compensation body 238 along the longitudinal dimension 242 of the conduit body 230 to allow the level-compensation body 238 to move resiliently relative to the conduit body 230 along the longitudinal dimension 242. More specifically, in the embodiment shown, the resilient body 240 is a coil spring surrounding an exposed portion 252 of the conduit body 230 and positioned to exert the resilient force on a surface 254 of the intermediate body 244 of the level-compensation body 238 which surrounds the enclosed portion 248 of the conduit body 230. For example, when the level-compensation body 238 slidably moves relative to the conduit body 230 along the longitudinal dimension 242 and toward the gas pressure source 224, such that the level-compensation opening 250 moves toward the conduit opening 236, the resilient body 240 may exert the resilient force against the surface 254 to effectively resist or oppose the motion of the level-compensation body 238 toward the gas pressure source 224. Such motion of the level-compensation body 238 toward the gas pressure source 224 may occur, for example, when the end body 246 of the level-compensation body 238 is pushed up against an object to be captured, for example, as a result of the actuator 222 moving the object capture apparatus 220 and thus the capture body 226 to and against the object. Such motion of the level-compensation body 238 toward the gas pressure source 224 may also occur, for example, when suction into the conduit chamber 234, generated by the gas pressure source 224, causes an object to be pulled toward and against the end body 246 of the level-compensation body 238 at the level-compensation opening 250, for example, as the capture body 226 of the object capture apparatus 220 captures the object. Resilient motion of the level-compensation body 238 relative to the conduit body 230 as enabled by the resilient body 240 (e.g., by resisting motion of the level-compensation body 238) may help attenuate impacts on the end body 246 of the level-compensation body 238 of the capture tool 232 during operation, such as - for example - when using high gas pressure/suction to capture objects. More generally, the level compensator 241 of the embodiment shown (i.e., the level-compensation body 238 and the resilient body 240) may allow more precise grasping of distorted objects and non-flat surfaces and may enable a high-seal vacuum on object capture, thus ensuring secure object retention.

However, the level compensator 241 shown in FIGS. 7 to 11 is an example only and may differ in alternative embodiments. For example, in some alternative embodiments, only a portion of the level compensation body may be movable relative to the conduit body. In some alternative embodiments, the level compensator may include more than one resilient body, and/or may include a resilient body other than a coil spring.

As noted above with regard to the embodiment of FIGS. 1 to 5, during operation, objects being captured or parts of such objects may become trapped inside the conduit chamber 234 or other internal elements of the object capture apparatus 220, thus blocking or clogging these internal elements. Although it may be possible to unblock the conduit chamber 234, for example, by causing the gas pressure source 224 to provide positive gas pressures to push the trapped object(s) back out through the conduit opening 236, in the embodiment shown in FIGS. 7 to 11, the object capture machine 218 further includes a cleaning tool 256 for cleaning out, at least, internal elements of the object capture apparatus 220 such as the conduit chamber 234 and an interior of the gas pressure source 224. The cleaning tool 256 includes a brush 258 and a cleaning tool actuator 260. The brush 258 may be used to clean, for example, the conduit chamber 234 by inserting at least a portion of the brush 258 into the conduit chamber 234. For example, the actuator 222 may move the object capture apparatus 220 such the level-compensation opening 250 is positioned above the brush 258, and may then move the object capture apparatus 220 downward to cause the brush 258 to be received, through the level-compensation opening 250, the level-compensation body 238, and the conduit opening 236, into the conduit chamber 234 in order to clean the conduit chamber 234. The cleaning tool actuator 260 is generally operable to move the brush 258 as it cleans in order to accelerate and/or enhance cleaning. For example, the cleaning tool actuator 260 may rotate the brush 258 or otherwise move the brush 258 when the brush 258 is received into the conduit chamber 234. In some embodiments, the cleaning tool actuator 260 may be a motor.

FIGS. 12 and 13 generally show, at 262, an example of an alternative embodiment of an object capture machine which may be used, for example, with the object sorting system 100. The object capture machine 262 is generally similar to the object capture machine 104 of the embodiment of FIGS. 1 to 5 and to the object capture machine 218 of the embodiment of FIGS. 7 to 11, and includes an object capture apparatus 264 which is generally similar to the object capture apparatus 122 of the embodiment of FIGS. 1 to 5 and to the object capture apparatus 220 of the embodiment of FIGS. 7 to 11, and an actuator 266 which is generally similar to the actuator 124 of the embodiment of FIGS. 1 to 5 and to the actuator 222 of the embodiment of FIGS. 7 to 11. As in the embodiments of FIGS. 1 to 5 and FIGS. 7 to 11, the object capture apparatus 264 includes a gas pressure source 268, a capture body 270, and a pressure sensor 272. The gas pressure source 268 is generally similar to the gas pressure source 126 of the embodiment of FIGS. 1 to 5 and to the gas pressure source 224 of the embodiment of FIGS. 7 to 11. Likewise, the pressure sensor 272 is generally similar to the pressure sensor 130 of the embodiment of FIGS. 1 to 5 and to the pressure sensor 228 of the embodiment of FIGS. 7 to 11. As in the embodiments of FIGS. 1 to 5 and FIGS. 7 to 11, the capture body 270 includes a conduit body 274 attached to the gas pressure source 268 and a capture tool 276 attached to the conduit body 274. The conduit body 274 is generally similar to the conduit body 144 of the embodiment of FIGS. 1 to 5 and to the conduit body 230 of the embodiment of FIGS. 7 to 11. The capture tool 276 of the embodiment shown in FIGS. 12 and 13, like the capture tool 232 of the embodiment of FIGS. 7 to 11, includes a level compensator 278 made up of a level-compensation body 280 and a resilient body 282. The level compensator 278 may operate similarly to the level compensator 241 of the embodiment of FIGS. 7 to 11, with the resilient body 282 enabling the level-compensation body 280 to move resiliently relative to the conduit body 274, for example, when the capture tool 276 captures an object. However, in the embodiment shown in FIGS. 12 and 13, the capture tool 276 also includes a resiliently deformable suction cup 284 detachably attached to the level-compensation body 280 across the level-compensation body 280 from the conduit body 274. The suction cup 284 defines a suction cup opening shown generally at 286. The suction cup opening 286 is similar to the suction cup opening 154 of the embodiment of FIGS. 1 to 5 and to the level-compensation opening 250 of the embodiment of FIGS. 7 to 11 - that is, the suction cup opening 286 is open to an exterior of the object capture apparatus 264, and receives gas pressures provided by the gas pressure source 268 and conveyed through the conduit body 274, the level-compensation body 280, and the suction cup 284. The capture tool 276 may use at least some of the gas pressures thus conveyed to the suction cup opening 286 to capture objects that are near the suction cup opening 286.

In each of the embodiments of FIGS. 1 to 5, FIGS. 7 to 11, and FIGS. 12 and 13, when the capture body 128/226/270 - and, more specifically, the capture tool 150/232/276 - captures an object, the capture body 128/226/270 is generally configured to hold the object against the capture body 128/226/270. More specifically, in each of these embodiments, when the capture body 128/226/270 captures the object, the capture body 128/226/270 is generally configured to hold the object against the capture body 128/226/270 outside of the conduit chamber 146/234. However, in some alternative embodiments, when the capture body captures an object, the capture body may instead be configured to receive at least a part of the object through the conduit opening into the conduit chamber.

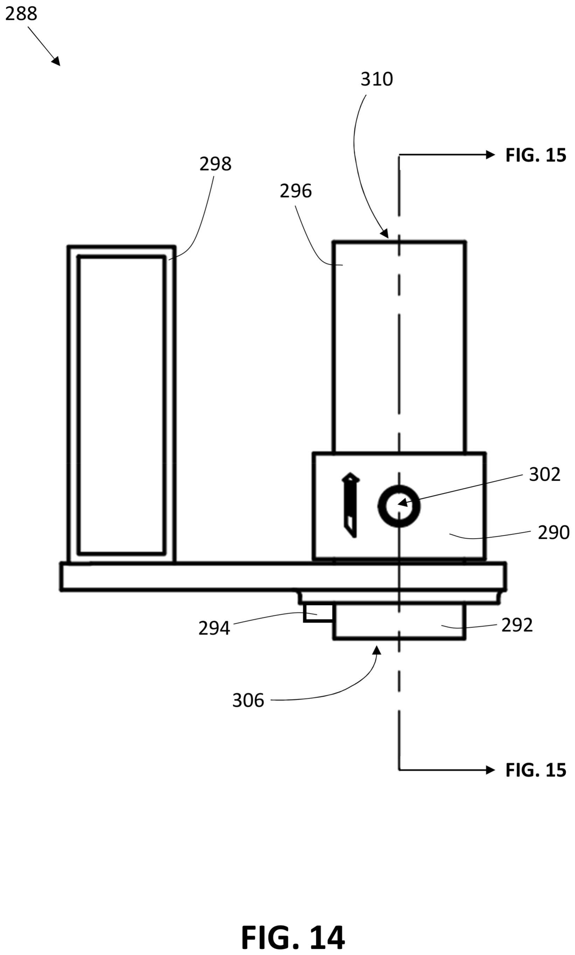

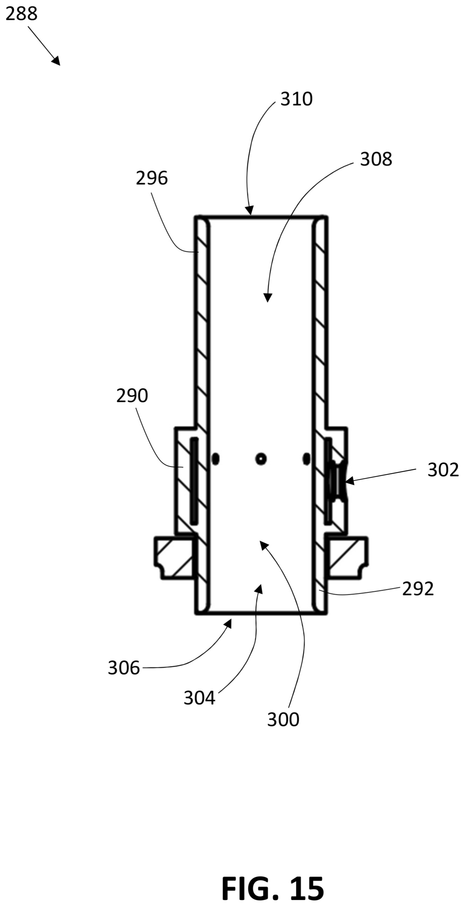

Referring now to FIGS. 14 and 15, an example of an object capture apparatus for such an alternative embodiment is shown generally at 288. The object capture apparatus 288 may be used, for example, with the object capture machine 104 in place of the object capture apparatus 122, with the object capture machine 218 in place of the object capture apparatus 220, or with the object capture machine 262 in place of the object capture apparatus 264. The object capture apparatus 288 includes a gas pressure source 290, a capture body 292, a pressure sensor 294, a transfer body 296, and a mounting body 298.

The gas pressure source 290 defines a gas pressure port, shown generally at 300, and a gas supply port, shown generally at 302. In general, the gas pressure source 290 may operate similarly to the gas pressure source 126 of the embodiment of FIGS. 1 to 5. That is, the gas pressure source 290 is operable to provide a gas pressure at the gas pressure port 300 upon receiving an input gas pressure through the gas supply port 302. In the embodiment shown, the gas pressure source 290 is a vacuum pump. More specifically, in the embodiment shown, the gas pressure source 290 is a material conveying pump and is operable to provide a negative gas pressure (i.e., vacuum) at the gas pressure port 300 upon receiving a positive input gas pressure through the gas supply port 302. The positive input gas pressure may be received from, for example, an input gas source (not shown) similar to the input gas source 142 of the embodiment of FIGS. 1 to 5, through an supply port input duct (not shown) connected to the gas supply port 302 and similar to the vacuum port input duct 138 or the purge port input duct 140 of the embodiment of FIGS. 1 to 5.

The capture body 292 defines a conduit chamber, shown generally at 304, and a conduit opening, shown generally at 306. In the embodiment shown, the capture body 292 is attached to the gas pressure source 290. The conduit chamber 304 is in communication with the gas pressure port 300 of the gas pressure source 290 to receive at least some of the gas pressure provided by the gas pressure source 290 at the gas pressure port 300. The gas pressure provided by the gas pressure source 290 at the gas pressure port 300 may thus cause a gas flow in the conduit chamber 304. The conduit opening 306 is in communication with the conduit chamber 304 such that the capture body 292 conveys, through the conduit chamber 304, to the conduit opening 306, at least some of the gas pressure provided by the gas pressure source 290 at the gas pressure port 300. Generally, the capture body 292 is operable to capture an object using at least some of the gas pressure thus conveyed through the conduit chamber 304 to the conduit opening 306. For example, a negative gas pressure (i.e., vacuum) provided at the gas pressure port 300 by the gas pressure source 290 may generate suction into the conduit chamber 304 at the conduit opening 306, and the capture body 292 may be operable to capture objects using at least some of this suction generated at the conduit opening 306. More specifically, the suction generated at the conduit opening 306 may cause the object to enter - that is, to be received into - the conduit chamber 304 through the conduit opening 306 when the capture body 292 captures the object.

The pressure sensor 294 is generally similar to the pressure sensor 130 of the embodiment of FIGS. 1 to 5. That is, the pressure sensor 294 is positioned between the gas pressure port 300 of the gas pressure source 290 and the conduit opening 306 of the capture body 292, is operable to measure a conduit chamber gas pressure in the conduit chamber 304 between the gas pressure port 300 and the conduit opening 306, and is also operable to send one or more pressure measurement signals representing such a measurement of the conduit chamber gas pressure to a controller such as the machine controller 106. The pressure sensor 294 may, for example, measure the conduit chamber gas pressure in the conduit chamber 304 when the capture body 292 (and thus the object capture apparatus 288) captures an object or attempts to capture an object.

The transfer body 296 defines a transfer chamber, shown generally at 308, and a transfer opening, shown generally at 310, in communication with the transfer chamber 308. In the embodiment shown, the transfer body 296 is attached to the gas pressure source 290 across from the capture body 292, and the transfer chamber 308 is in communication with the conduit chamber 304 through the gas pressure source 290. When the gas pressure source 290 provides the negative gas pressure at the gas pressure port 300 and generates suction into the conduit chamber 304 at the conduit opening 306, it may cause a gas flow in the conduit chamber 304 away from the conduit opening 306 and toward the gas pressure port 300. This gas flow may continue through the gas pressure source 290, into the transfer chamber 308 of the transfer body 296, and out of the transfer chamber 308 through the transfer opening 310. If such a gas flow is ongoing - that is, if the gas pressure source 290 is actively providing the negative gas pressure at the gas pressure port 300 - when an object is captured by the capture body 292 and received into the conduit chamber 304 (as described above), then the captured object may be carried by this gas flow through the conduit chamber 304, the gas pressure port 300, the gas pressure source 290, and the transfer chamber 308 and out the transfer opening 310. That is, upon capturing the object, the object capture apparatus 288 may convey the object through the object capture apparatus 288 from the conduit opening 306 to the transfer opening 310. In some embodiments, a hose (not shown) may be connected to the transfer body 296 at the transfer opening 310 to receive objects captured by the object capture apparatus 288 and convey these captured objects to a storage location such as, for example, the sorting container 108 or the sorting container 110. In such embodiments, the hose may thus be in communication with the conduit chamber 304 through the gas pressure port 300. In some embodiments, the capture body 292 may further comprise a capture tool (not shown) operable to convey an object to the conduit opening 306 such that the object may be captured and conveyed to the hose.

The mounting body 298 provides a mounting point for an actuator, such as the actuator 124 of the embodiment of FIGS. 1 to 5, the actuator 222 of the embodiment of FIGS. 7 to 11, or the actuator 266 of the embodiment of FIGS. 12 and 13, to hold and support the object capture apparatus 288 and to move the object capture apparatus 288 during operation. In some embodiments, the mounting body 298 may be releasably attachable to the actuator.

In operation, to capture a target object, the actuator may position the object capture apparatus 288 such the conduit opening 306 of the capture body 292 is near the target object, and the gas pressure source 290 may provide a negative gas pressure at the gas pressure port 300 to generate suction into the conduit chamber 304 at the conduit opening 306 and to cause a gas flow in the object capture apparatus 288 from the conduit opening 306 to the transfer opening 310. As a result, the target object may be pulled through the conduit opening 306 into the conduit chamber 304, and then conveyed through the object capture apparatus 288 and out the transfer opening 310. If a hose is connected to the transfer body 296, then the target object may be further conveyed through the hose to a storage location.

The embodiments described above are examples only, and alternative embodiments may vary. For example, in some alternative embodiments, the object sorting system 100 may include more than one conveyor, more than one object capture machine, more than one triage optical sensor/camera, and/or a different number of sorting containers. In some alternative embodiments, the machine controller 106 may also control the conveyor 102. In some alternative embodiments, the machine controller 106 may also control the cleaning tool actuator 260.

### Embodiments

This disclosure includes but is not limited to the following embodiments, which may be combined with other subject matter in this specification.
1. An apparatus for capturing an object, the apparatus comprising:
   a gas pressure source defining a gas pressure port, the gas pressure source operable to provide a gas pressure at the gas pressure port;
   a capture body defining, at least:
      a conduit chamber in communication with the gas pressure port; and
      a conduit opening in communication with the conduit chamber such that the capture body conveys, through the conduit chamber, to the conduit opening, at least some of the gas pressure provided by the gas pressure source at the gas pressure port,
      wherein the capture body is operable to capture the object using at least some of the gas pressure conveyed through the conduit chamber to the conduit opening; and
      a pressure sensor between the gas pressure port and the conduit opening, the pressure sensor operable to measure a conduit chamber gas pressure in the conduit chamber between the gas pressure port and the conduit opening.
2. The apparatus of embodiment 1 wherein the gas pressure provided by the gas pressure source at the gas pressure port causes a gas flow in the conduit chamber.
3. The apparatus of embodiment 1 or 2 wherein the capture body comprises a capture tool in communication with the conduit opening to receive, from the conduit opening, at least some of the gas pressure conveyed through the conduit chamber to the conduit opening.
4. The apparatus of embodiment 3 wherein the capture tool is operable to capture the object using at least some of the gas pressure received by the capture tool.
5. The apparatus of embodiment 3 or 4 wherein:
   the capture body further comprises a conduit body defining the conduit chamber and the conduit opening; and
   the capture tool is attached to the conduit body.
6. The apparatus of embodiment 5 wherein the capture tool is detachably attached to the conduit body.
7. The apparatus of embodiment 6 wherein the capture tool is interchangeable.
8. The apparatus of embodiment 5, 6, or 7 wherein the capture tool comprises a level-compensation body attached to the conduit body, at least a portion of the level compensation body movable relative to the conduit body, the level compensation body defining at least a level-compensation opening open to an exterior of the apparatus and in communication with the conduit opening through the level-compensation body such that the level-compensation body conveys, to the level-compensation opening, at least some of the gas pressure received from the conduit opening.
9. The apparatus of embodiment 8 wherein the capture tool is operable to capture the object using at least some of the gas pressure conveyed to the level-compensation opening.
10. The apparatus of embodiment 8 or 9 wherein the capture tool further comprises a resilient body positioned to exert a resilient force between the conduit body and the level-compensation body to allow the at least a portion of the level-compensation body to move resiliently relative to the conduit body.
11. The apparatus of embodiment 10 wherein the conduit body is elongate along a longitudinal dimension of the conduit body, the at least a portion of the level-compensation body is slidable relative to the conduit body along the longitudinal dimension of the conduit body, and the resilient body is positioned to exert the resilient force between the conduit body and the level-compensation body along the longitudinal dimension of the conduit body.
12. The apparatus of embodiment 10 or 11 wherein the resilient body comprises a coil spring surrounding at least a portion of the conduit body.
13. The apparatus of embodiment 12 wherein at least a surface of the level-compensation body surrounds a portion of the conduit body and the coil spring is positioned to exert the resilient force on the surface of the level-compensation body.
14. The apparatus of any one of embodiments 8 to 13 wherein the level-compensation body comprises an intermediate body attached to the conduit body and an end body detachably attached to the intermediate body, the end body defining at least the level-compensation opening.
15. The apparatus of embodiment 14 wherein the end body is resiliently deformable.
16. The apparatus of embodiment 14 or 15 wherein the end body comprises a suction cup.
17. The apparatus of any one of embodiments 8 to 13 wherein the level-compensation body comprises a resiliently deformable portion defining at least the level-compensation opening.
18. The apparatus of embodiment 17 wherein the resiliently deformable portion comprises a suction cup.
19. The apparatus of any one of embodiments 3 to 7 wherein the capture tool comprises a suction cup defining a suction cup opening open to an exterior of the apparatus and in communication with the conduit opening through the suction cup such that the suction cup conveys, to the suction cup opening, at least some of the gas pressure received from the conduit opening.
20. The apparatus of embodiment 19 wherein the capture tool is operable to capture the object using at least some of the gas pressure conveyed to the suction cup opening.
21. The apparatus of any one of embodiments 3 to 20 wherein the capture tool comprises a pneumatic magnet in communication with the conduit opening to receive, from the conduit opening, at least some of the gas pressure conveyed through the conduit chamber to the conduit opening.
22. The apparatus of embodiment 21 wherein the capture tool is operable to capture the object using at least some of the gas pressure received by the pneumatic magnet.
23. The apparatus of any one of embodiments 3 to 22 wherein the capture tool comprises a pneumatic gripper in communication with the conduit opening to receive, from the conduit opening, at least some of the gas pressure conveyed through the conduit chamber to the conduit opening.
24. The apparatus of embodiment 23 wherein the capture tool is operable to capture the object using at least some of the gas pressure received by the pneumatic gripper.
25. The apparatus of any one of embodiments 1 to 24 wherein the capture body is configured to hold the object against the capture body when the capture body captures the object.
26. The apparatus of embodiment 25 wherein the capture body is configured to hold the object outside of the conduit chamber when the capture body holds the object against the capture body.
27. The apparatus of any one of embodiments 1 to 25 wherein the conduit body is configured to receive the object through the conduit opening into the conduit chamber when the capture body captures the object.
28. The apparatus of embodiment 27 wherein the capture body is operable to convey the object to the conduit opening when the capture body captures the object.
29. The apparatus of embodiment 27 or 28 further comprising a hose in communication with the conduit chamber, the hose configured to receive the object from the conduit chamber and convey the object to a storage location.
30. The apparatus of embodiment 29 wherein the hose is in communication with the conduit chamber through the gas pressure port.
31. The apparatus of any one of embodiments 1 to 30 further comprising an optical sensor.
32. The apparatus of embodiment 31 wherein the optical sensor is attached to the capture body.
33. The apparatus of embodiment 31 or 32 wherein the optical sensor is attached to the gas pressure source.
34. The apparatus of embodiment 31, 32, or 33 wherein the optical sensor comprises at least one camera.
35. The apparatus of any one of embodiments 1 to 34 wherein the gas pressure source comprises a vacuum pump.
36. The apparatus of embodiment 35 wherein the vacuum pump comprises a vacuum ejector.
37. The apparatus of embodiment 35 wherein the vacuum pump comprises a material conveying pump.
38. The apparatus of any one of embodiments 1 to 37 wherein the gas pressure source and the capture body have a combined mass of about 1 kilogram.
39. The apparatus of any one of embodiments 1 to 37 wherein the gas pressure source and the capture body have a combined mass of at most 1 kilogram.
40. The apparatus of any one of embodiments 1 to 39 wherein the gas pressure source comprises aluminum.
41. The apparatus of any one of embodiments 1 to 40 wherein the capture body comprises aluminum.
42. The apparatus of any one of embodiments 1 to 41 wherein the capture body is configured to cause at least some of the gas pressure provided by the gas pressure source at the gas pressure port to unblock the conduit chamber.
43. The apparatus of any one of embodiments 1 to 42 wherein the capture body comprises a conduit surface defining the conduit chamber, the conduit surface comprising a lubricant coating.
44. The apparatus of embodiment 43, where in the lubricant coating comprises epoxy.
45. The apparatus of any one of embodiments 1 to 44 wherein the gas pressure source is operable to provide a positive gas pressure at the gas pressure port.
46. The apparatus of any one of embodiments 1 to 45 wherein the gas pressure source is operable to provide a negative gas pressure at the gas pressure port.
47. The apparatus of embodiment 46 wherein the negative gas pressure provided by the gas pressure source at the gas pressure port generates suction into the conduit chamber at the conduit opening.
48. The apparatus of embodiment 47 wherein the capture body is operable to capture the object using at least some of the suction generated at the conduit opening.
49. A machine comprising:
   the apparatus of any one of embodiments 1 to 48; and
   an actuator operable to move the apparatus.
50. The machine of embodiment 49 wherein the actuator comprises a robot arm.
51. The machine of embodiment 49 or 50 further comprising a cleaning tool operable to clean at least the conduit chamber.
52. The machine of embodiment 51 wherein:
   the cleaning tool comprises a brush; and
   at least a portion of the brush is receivable into the conduit chamber to clean at least the conduit chamber.
53. The machine of embodiment 52 wherein the at least a portion of the brush is receivable into the conduit chamber through the conduit opening.
54. The machine of embodiment 52 or 53 wherein the cleaning tool further comprises a cleaning tool actuator operable to move the brush when the brush is received into the conduit chamber.
55. The machine of embodiment 54 wherein the cleaning tool actuator comprises a motor.
56. An object capture system comprising:
   the apparatus of any one of embodiments 1 to 48 or the machine of any one of embodiments 49 to 55;
   at least one processor circuit; and
   at least one computer-readable storage medium comprising stored thereon program codes that, when executed by the at least one processor circuit, cause the at least one processor circuit to, at least:
      receive a pressure measurement signal from the pressure sensor, the pressure measurement signal representing a measurement of the conduit chamber gas pressure; and
      in response to receiving the pressure measurement signal, use at least the measurement of the conduit chamber gas pressure to predict a probability of successful object capture.
57. The object capture system of embodiment 56 when directly or indirectly dependent on embodiment 31 wherein the program codes, when executed by the at least one processor circuit, further cause the at least one processor circuit to, at least:
   receive an optical measurement signal from the optical sensor, the optical measurement signal representing an image of a field of view of the optical sensor; and
   in response to receiving the optical measurement signal, use at least one image analysis algorithm to analyze the image to identify capturable objects in the image.
58. An object capture system comprising:
   the apparatus of any one of embodiments 1 to 48 when directly or indirectly dependent on embodiment 31, or the machine of any one of embodiments 49 to 55 when directly or indirectly dependent on embodiment 31;
   at least one processor circuit; and
   at least one computer-readable storage medium comprising stored thereon program codes that, when executed by the at least one processor circuit, cause the at least one processor circuit to, at least:
      receive an optical measurement signal from the optical sensor, the optical measurement signal representing an image of a field of view of the optical sensor; and
      in response to receiving the optical measurement signal, use at least one image analysis algorithm to analyze the image to identify capturable objects in the image.
59. The object capture system of embodiment 57 or 58 wherein the field of view of the optical sensor comprises a capture space of the capture body, the capture body operable to capture the object from the capture space.
60. The object capture system of embodiment 57, 58, or 59 wherein the program codes, when executed by the at least one processor circuit, further cause the at least one processor circuit to, at least, in response to an identification, by the at least one image analysis algorithm, of a capturable object in the image, use a location of the identified capturable object in the image to predict a location of the identified capturable object relative to the capture body.
61. The object capture system of any one of embodiments 57 to 60 wherein the program codes, when executed by the at least one processor circuit, further cause the at least one processor circuit to, at least, in response to an identification, by the at least one image analysis algorithm, of a capturable object in the image, predict an optimal capture location on the identified capturable object for capturing the identified capturable object.
62. The object capture system of any one of embodiments 57 to 61 wherein the program codes, when executed by the at least one processor circuit, further cause the at least one processor circuit to, at least, in response to an identification, by the at least one image analysis algorithm, of a capturable object in the image, predict an optimal gas pressure to provide at the gas pressure port for capturing the identified capturable object.
63. The object capture system of any one of embodiments 57 to 62 wherein the program codes, when executed by the at least one processor circuit, further cause the at least one processor circuit to, at least, in response to an identification, by the at least one image analysis algorithm, of a capturable object in the image, measure a size, in the image, of the identified capturable object.
64. The object capture system of any one of embodiments 57 to 63 wherein the program codes, when executed by the at least one processor circuit, further cause the at least one processor circuit to, at least, in response to an identification, by the at least one image analysis algorithm, of a capturable object in the image, characterize a shape, in the image, of the identified capturable object.
65. The object capture system of any one of embodiments 56 to 64 further comprising a gas pressure system comprising the gas pressure source and an input gas source operable to provide input gas pressures to the gas pressure source to cause the gas pressure source to provide the gas pressure at the gas pressure port.
66. The object capture system of embodiment 57 or any one of embodiments 59 to 65 when directly or indirectly dependent on embodiment 57 wherein the program codes, when executed by the at least one processor circuit, further cause the at least one processor circuit to, at least, in response to the at least one image analysis algorithm analyzing the image, use at least a resulting output of the at least one image analysis algorithm to predict the probability of successful object capture.
67. The object capture system of embodiment 58 or any one of embodiments 59 to 65 when directly or indirectly dependent on embodiment 58 wherein the program codes, when executed by the at least one processor circuit, further cause the at least one processor circuit to, at least, in response to the at least one image analysis algorithm analyzing the image, use at least a resulting output of the at least one image analysis algorithm to predict a probability of successful object capture.
68. The object capture system of embodiment 66 or 67 when directly or indirectly dependent on embodiment 63 wherein the program codes, when executed by the at least one processor circuit, further cause the at least one processor circuit to, at least, use at least the measured size of the identified capturable object to predict the probability of successful object capture for the identified capturable object.
69. The object capture system of embodiment 66, 67, or 68 when directly or indirectly dependent on embodiment 64 wherein the program codes, when executed by the at least one processor circuit, further cause the at least one processor circuit to, at least, use at least the characterized shape of the identified capturable object to predict the probability of successful object capture for the identified capturable object.
70. The object capture system of embodiment 56 or 57, of any one of embodiments 59 to 65 when directly or indirectly dependent on embodiment 56, or of any one of embodiments 66 to 69, wherein the program codes, when executed by the at least one processor circuit, further cause the at least one processor circuit to, at least, when predicting the probability of successful object capture, implement at least one machine-learning model to predict the probability of successful object capture.
71. The object capture system of embodiment 56 or 57, of any one of embodiments 59 to 65 when directly or indirectly dependent on embodiment 56, or of any one of embodiments 66 to 70, wherein the program codes, when executed by the at least one processor circuit, further cause the at least one processor circuit to, at least, predict the probability of successful object capture during an attempt, by the apparatus, to capture the object.
72. The object capture system of embodiment 65 when directly or indirectly dependent on embodiment 56, or of any one of embodiments 66 to 71 when directly or indirectly dependent on embodiment 65, wherein the program codes, when executed by the at least one processor circuit, further cause the at least one processor circuit to, at least, in response to a prediction of the probability of successful object capture, send at least one pressure control signal to the gas pressure system to cause the gas pressure source to provide the gas pressure at a pressure value determined based at least on the prediction of the probability of successful object capture.
73. The object capture system of embodiment 56 or 57 when directly or indirectly dependent on embodiment 49, of any one of embodiments 59 to 65 when directly or indirectly dependent on embodiments 49 and 56, or of any one of embodiments 66 to 72 when directly or indirectly dependent on embodiment 49, wherein the program codes, when executed by the at least one processor circuit, further cause the at least one processor circuit to, at least, in response a prediction of the probability of successful object capture, send at least one movement control signal to the actuator to cause the actuator to move the apparatus along a movement path determined based at least on the prediction of the probability of successful object capture.
74. The object capture system of embodiment 56 or 57, of any one of embodiments 59 to 65 when directly or indirectly dependent on embodiment 56, or of any one of embodiments 66 to 73, wherein the program codes, when executed by the at least one processor circuit, further cause the at least one processor circuit to, at least, in response to a prediction of the probability of successful object capture, compare the predicted probability of successful object capture to a threshold value.
75. The object capture system of embodiment 74 wherein the program codes, when executed by the at least one processor circuit, further cause the at least one processor circuit to, at least, in response to the predicted probability of successful object capture being greater than the threshold value, infer a successful object capture.
76. The object capture system of embodiment 75 when directly or indirectly dependent on embodiment 65 wherein the program codes, when executed by the at least one processor circuit, further cause the at least one processor circuit to, at least, in response to an inference of a successful object capture, send at least one pressure control signal to the gas pressure system to cause the gas pressure source to maintain the gas pressure at a current pressure value.
77. The object capture system of embodiment 75 or 76 when directly or indirectly dependent on embodiment 49 wherein the program codes, when executed by the at least one processor circuit, further cause the at least one processor circuit to, at least, in response to an inference of a successful object capture, send at least one movement control signal to the actuator to cause the actuator to move the apparatus along a movement path toward a drop location.
78. The object capture system of embodiment 77 when directly or indirectly dependent on embodiment 65, wherein:
   the program codes, when executed by the at least one processor circuit, further cause the at least one processor circuit to, at least, in response to the actuator moving the apparatus to an end point of the movement path, send at least one pressure control signal to the gas pressure system to cause the gas pressure source to provide the gas pressure at a release pressure value; and
   the capture body is configured to release the object at least when the gas pressure source provides the gas pressure at the release pressure value.
79. The object capture system of embodiment 78 wherein the end point of the movement path comprises the drop location.
80. The object capture system of any one of embodiments 74 to 79 wherein the program codes, when executed by the at least one processor circuit, further cause the at least one processor circuit to, at least, in response to the predicted probability of successful object capture being less than or equal to the threshold value, infer an unsuccessful object capture.
81. The object capture system of embodiment 80 when directly or indirectly dependent on embodiment 49 wherein the program codes, when executed by the at least one processor circuit, further cause the at least one processor circuit to, at least, in response to an inference of an unsuccessful object capture, send at least one movement control signal to the actuator to cause the actuator to move the apparatus away from the object.
82. The object capture system of embodiment 80 or 81 when directly or indirectly dependent on embodiment 65 wherein the program codes, when executed by the at least one processor circuit, further cause the at least one processor circuit to, at least, in response to an inference of an unsuccessful object capture, send at least one pressure control signal to the gas pressure system to cause the gas pressure source to decrease the gas pressure provided at the gas pressure port.
83. The object capture system of embodiment 80 or 81 when directly or indirectly dependent on embodiment 65, or of embodiment 82, wherein the program codes, when executed by the at least one processor circuit, further cause the at least one processor circuit to, at least, in response to an inference of an unsuccessful object capture, send at least one pressure control signal to the gas pressure system to cause the gas pressure source to increase the gas pressure provided at the gas pressure port.
84. An object sorting system comprising:
   the machine of any one of embodiments 49 to 55, wherein the actuator is operable to move the apparatus to cause the capture body to move within at least a capture range of motion; and
   a conveyor operable and positioned to convey objects within the capture range of motion.
85. An object sorting system comprising:
   the object capture system of any one of embodiments 56 to 83 when directly or indirectly dependent on embodiment 49 wherein the actuator is operable to move the apparatus to cause the capture body to move within at least a capture range of motion; and
   a conveyor operable and positioned to convey objects within the capture range of motion.
86. The object sorting system of embodiment 84 or 85 further comprising a triage optical sensor, wherein a field of view of the triage optical sensor comprises at least a portion of the conveyor.
87. The object sorting system of embodiment 86 wherein the at least a portion of the conveyor comprises at least an upstream portion of the conveyor, the upstream portion positioned to convey the objects before the objects reach the capture range of motion.
88. The object sorting system of embodiment 86 or 87 wherein the triage optical sensor comprises at least one camera.
89. The object sorting system of embodiment 86, 87, or 88 when directly or indirectly dependent on embodiment 85 wherein the program codes, when executed by the at least one processor circuit, further cause the at least one processor circuit to, at least:
   receive a triage optical measurement signal from the triage optical sensor, the triage optical measurement signal representing a triage image of the field of view of the triage optical sensor; and
   in response to receiving the triage optical measurement signal, use at least one triage image analysis algorithm to analyze the triage image to identify capturable objects in the triage image.
90. The object sorting system of embodiment 89 wherein the program codes, when executed by the at least one processor circuit, further cause the at least one processor circuit to, at least, in response to an identification, by the at least one triage image analysis algorithm, of a capturable object in the triage image, assign a capture priority to the identified capturable object.
91. The object sorting system of embodiment 90 wherein the program codes, when executed by the at least one processor circuit, further cause the at least one processor circuit to, at least:
   in response to the identification of the capturable object in the triage image, measure a size, in the triage image, of the identified capturable object; and
   assign the capture priority to the identified capturable object based at least on the measured size of the identified capturable object.
92. The object sorting system of embodiment 90 or 91 wherein the program codes, when executed by the at least one processor circuit, further cause the at least one processor circuit to, at least:
   in response to the identification of the capturable object in the triage image, characterize a shape, in the triage image, of the identified capturable object; and
   assign the capture priority to the identified capturable object based at least on the characterized shape of the identified capturable object.
93. The object sorting system of embodiment 90, 91, or 92 wherein the program codes, when executed by the at least one processor circuit, further cause the at least one processor circuit to, at least:
   in response to the identification of the capturable object in the triage image, predict a material type of the identified capturable object based on an appearance of the identified capturable object in the triage image; and
   assign the capture priority to the identified capturable object based at least on the predicted material type of the identified capturable object.
94. The object sorting system of any one of embodiments 90 to 93 wherein the program codes, when executed by the at least one processor circuit, further cause the at least one processor circuit to, at least, assign the capture priority to the identified capturable object based at least on historical data.
95. The object sorting system of any one of embodiments 90 to 94 wherein the program codes, when executed by the at least one processor circuit, further cause the at least one processor circuit to, at least, in response to at least one assignment of capture priority, identify a target capturable object based at least on a capture priority of the target capturable object.
96. The object sorting system of embodiment 95 when directly or indirectly dependent on embodiment 65 wherein the program codes, when executed by the at least one processor circuit, further cause the at least one processor circuit to, at least, in response to identifying the target capturable object, send at least one pressure control signal to the gas pressure system to cause the gas pressure source to provide the gas pressure for capturing the target capturable object.
97. The object sorting system of embodiment 95 or 96 wherein the program codes, when executed by the at least one processor circuit, further cause the at least one processor circuit to, at least, in response to identifying the target capturable object, send at least one movement control signal to the actuator to cause the actuator to move the apparatus to position the capture body for capturing the target capturable object.
98. The object sorting system of any one of embodiments 84 to 97 wherein the objects comprise solid waste.
99. The object sorting system of any one of embodiments 84 to 98 wherein the objects comprise recyclable materials.
100. A method of operating the apparatus of embodiment 42 or of any one of embodiments 43 to 48 when directly or indirectly dependent on embodiment 42, the method comprising causing the gas pressure source to provide the gas pressure at the gas pressure port to unblock the conduit chamber.
101. A method of operating the apparatus of embodiment 45 or of embodiment 46, 47, or 48 when directly or indirectly dependent on embodiment 45, the method comprising causing the gas pressure source to provide the positive gas pressure at the gas pressure port.
102. A method of operating the apparatus of embodiment 46, 47, or 48, the method comprising causing the gas pressure source to provide the negative gas pressure at the gas pressure port.
103. A method of operating the apparatus of embodiment 46, 47, or 48 when directly or indirectly dependent on embodiment 45, the method comprising:
   causing the gas pressure source to provide the positive gas pressure at the gas pressure port; and
   causing the gas pressure source to provide the negative gas pressure at the gas pressure port.
Although specific embodiments have been described and illustrated, such embodiments should be considered illustrative only and not as limiting the invention as construed according to the accompanying claims.

## Claims

1. An apparatus for capturing an object, the apparatus comprising:
a gas pressure source defining a gas pressure port, the gas pressure source operable to provide a gas pressure at the gas pressure port;
a capture body defining, at least:
a conduit chamber in communication with the gas pressure port; and
a conduit opening in communication with the conduit chamber such that the capture body conveys, through the conduit chamber, to the conduit opening, at least some of the gas pressure provided by the gas pressure source at the gas pressure port,
wherein the capture body is operable to capture the object using at least some of the gas pressure conveyed through the conduit chamber to the conduit opening; and
a pressure sensor between the gas pressure port and the conduit opening, the pressure sensor operable to measure a conduit chamber gas pressure in the conduit chamber between the gas pressure port and the conduit opening.

2. The apparatus of claim 1 wherein the capture body comprises a capture tool in communication with the conduit opening to receive, from the conduit opening, at least some of the gas pressure conveyed through the conduit chamber to the conduit opening.

3. The apparatus of claim 2 wherein:
the capture body further comprises a conduit body defining the conduit chamber and the conduit opening; and
the capture tool is detachably attached to the conduit body.

4. The apparatus of claim 3 wherein the capture tool is interchangeable.

5. The apparatus of claim 2 wherein:
the capture body further comprises a conduit body defining the conduit chamber and the conduit opening; and
the capture tool comprises a level-compensation body attached to the conduit body, at least a portion of the level compensation body movable relative to the conduit body, the level compensation body defining at least a level-compensation opening open to an exterior of the apparatus and in communication with the conduit opening through the level-compensation body such that the level-compensation body conveys, to the level-compensation opening, at least some of the gas pressure received from the conduit opening.

6. The apparatus of claim 5 wherein the capture tool further comprises a resilient body positioned to exert a resilient force between the conduit body and the level-compensation body to allow the at least a portion of the level-compensation body to move resiliently relative to the conduit body.

7. The apparatus of claim 6 wherein the conduit body is elongate along a longitudinal dimension of the conduit body, the at least a portion of the level-compensation body is slidable relative to the conduit body along the longitudinal dimension of the conduit body, and the resilient body is positioned to exert the resilient force between the conduit body and the level-compensation body along the longitudinal dimension of the conduit body.

8. The apparatus of claim 5 wherein:
the level-compensation body comprises an intermediate body attached to the conduit body and an end body detachably attached to the intermediate body, the end body defining at least the level-compensation opening; and
the end body comprises a suction cup.

9. The apparatus of claim 2 wherein the capture tool comprises a suction cup defining a suction cup opening open to an exterior of the apparatus and in communication with the conduit opening through the suction cup such that the suction cup conveys, to the suction cup opening, at least some of the gas pressure received from the conduit opening.

10. The apparatus of claim 2 wherein the capture tool comprises a pneumatic magnet in communication with the conduit opening to receive, from the conduit opening, at least some of the gas pressure conveyed through the conduit chamber to the conduit opening.

11. The apparatus of claim 2 wherein the capture tool comprises a pneumatic gripper in communication with the conduit opening to receive, from the conduit opening, at least some of the gas pressure conveyed through the conduit chamber to the conduit opening.

12. The apparatus of claim 1 wherein the conduit body is configured to receive the object through the conduit opening into the conduit chamber when the capture body captures the object.

13. The apparatus of claim 1 further comprising an optical sensor.

14. The apparatus of claim 1 wherein the gas pressure source comprises a vacuum pump.

15. The apparatus of claim 1 wherein the gas pressure source is operable to provide a negative gas pressure at the gas pressure port.

16. A machine comprising:
the apparatus of claim 1; and
an actuator operable to move the apparatus.

17. The machine of claim 16 wherein the actuator comprises a robot arm.

18. The machine of claim 16 further comprising a cleaning tool operable to clean at least the conduit chamber.

19. An object capture system comprising:
the apparatus of claim 1;
at least one processor circuit; and
at least one computer-readable storage medium comprising stored thereon program codes that, when executed by the at least one processor circuit, cause the at least one processor circuit to, at least:
receive a pressure measurement signal from the pressure sensor, the pressure measurement signal representing a measurement of the conduit chamber gas pressure; and
in response to receiving the pressure measurement signal, use at least the measurement of the conduit chamber gas pressure to predict a probability of successful object capture.

20. An object capture system comprising:
the apparatus of claim 13;
at least one processor circuit; and
at least one computer-readable storage medium comprising stored thereon program codes that, when executed by the at least one processor circuit, cause the at least one processor circuit to, at least:
receive an optical measurement signal from the optical sensor, the optical measurement signal representing an image of a field of view of the optical sensor; and
in response to receiving the optical measurement signal, use at least one image analysis algorithm to analyze the image to identify capturable objects in the image.

21. An object capture system comprising:
the apparatus of claim 13;
at least one processor circuit; and
at least one computer-readable storage medium comprising stored thereon program codes that, when executed by the at least one processor circuit, cause the at least one processor circuit to, at least:
receive a pressure measurement signal from the pressure sensor, the pressure measurement signal representing a measurement of the conduit chamber gas pressure;
in response to receiving the pressure measurement signal, use at least the measurement of the conduit chamber gas pressure to predict a probability of successful object capture;
receive an optical measurement signal from the optical sensor, the optical measurement signal representing an image of a field of view of the optical sensor; and
in response to receiving the optical measurement signal, use at least one image analysis algorithm to analyze the image to identify capturable objects in the image.

22. The object capture system of claim 21 wherein the program codes, when executed by the at least one processor circuit, further cause the at least one processor circuit to, at least, in response to an identification, by the at least one image analysis algorithm, of a capturable object in the image, use a location of the identified capturable object in the image to predict a location of the identified capturable object relative to the capture body.

23. The object capture system of claim 21 wherein the program codes, when executed by the at least one processor circuit, further cause the at least one processor circuit to, at least, in response to an identification, by the at least one image analysis algorithm, of a capturable object in the image, predict an optimal capture location on the identified capturable object for capturing the identified capturable object.

24. The object capture system of claim 21 wherein the program codes, when executed by the at least one processor circuit, further cause the at least one processor circuit to, at least, in response to an identification, by the at least one image analysis algorithm, of a capturable object in the image, predict an optimal gas pressure to provide at the gas pressure port for capturing the identified capturable object.

25. The object capture system of claim 21 wherein the program codes, when executed by the at least one processor circuit, further cause the at least one processor circuit to, at least, when predicting the probability of successful object capture, implement at least one machine-learning model to predict the probability of successful object capture.

26. The object capture system of claim 21 further comprising a gas pressure system comprising the gas pressure source and an input gas source operable to provide input gas pressures to the gas pressure source to cause the gas pressure source to provide the gas pressure at the gas pressure port, wherein the program codes, when executed by the at least one processor circuit, further cause the at least one processor circuit to, at least, in response to a prediction of the probability of successful object capture, send at least one pressure control signal to the gas pressure system to cause the gas pressure source to provide the gas pressure at a pressure value determined based at least on the prediction of the probability of successful object capture.

27. The object capture system of claim 21 further comprising an actuator operable to move the apparatus, wherein the program codes, when executed by the at least one processor circuit, further cause the at least one processor circuit to, at least, in response a prediction of the probability of successful object capture, send at least one movement control signal to the actuator to cause the actuator to move the apparatus along a movement path determined based at least on the prediction of the probability of successful object capture.

28. An object sorting system comprising:
the machine of claim 16, wherein the actuator is operable to move the apparatus to cause the capture body to move within at least a capture range of motion; and
a conveyor operable and positioned to convey objects within the capture range of motion.

29. The object sorting system of claim 28 wherein the objects comprise recyclable materials.

30. A method of operating the apparatus of claim 1 wherein the capture body is configured to cause at least some of the gas pressure provided by the gas pressure source at the gas pressure port to unblock the conduit chamber, the method comprising:
causing the gas pressure source to provide the gas pressure at the gas pressure port to unblock the conduit chamber.
